# FASCICULE DE BREVET EUROPEEN

(11) **EP 3 408 089 B1**
(45) Date de publication et mention de la délivrance du brevet: **16.08.2023**
(21) Numéro de dépôt: 16831825.1
(22) Date de dépôt: 22.12.2016
(51) Int. Cl.: B32B 17/10, B60S 1/08, B60R 1/00

(54) **VITRAGE FEUILLETE DE VEHICULE AVEC ECRAN AMOLED**
FAHRZEUG-VERBUNDVERGLASUNG MIT EINEM AMOLED-BILDSCHIRM
LAMINATED VEHICLE GLAZING WITH AMOLED SCREEN

(30) Priorité: 31.12.2015 FR 1563481
(43) Date de publication de la demande: 05.12.2018
(73) Titulaire: SAINT-GOBAIN GLASS FRANCE, 92400 Courbevoie (FR)
(72) Inventeur: LABROT, Michael, 52072 Aachen (DE); OFFERMANN, Volkmar, 52249 Eschweiler (DE); REUL, Bernhard, 52134 Herzogenrath (DE)
(74) Mandataire: Saint-Gobain Recherche
(86) Numéro de dépôt international: PCT/FR2016/053638
(87) Numéro de publication internationale: WO 2017/115041

(56) Documents cités:
- WO-A1-2007/006781
- WO-A1-2009/136305
- WO-A1-2015/041106
- DE-A1- 4 127 656
- DE-A1-102008 004 049
- DE-A1-102013 003 686
- US-A1- 2007 210 906

## Description

L'invention concerne un vitrage feuilleté de véhicule et plus particulièrement un vitrage feuilleté de véhicule intégrant un écran AMOLED.

Il existe de plus en plus de pare-brises intelligents délivrant des informations au conducteur.

Le document WO2015041106 propose en particulier un pare-brise automobile comportant un écran AMOLED (Active Matrix Organic Light Emitting Diode en anglais) -entre les faces internes des deux vitrages, écran agencé en périphérie et masqué dans la bordure émaillée en face F2 c'est-à-dire la face interne du vitrage le plus extérieur. L'écran AMOLED en position horizontale vise à remplacer le rétroviseur interne pour voir l'arrière du véhicule -classiquement sous forme d'un miroir- et est situé préférentiellement dans la partie centrale le long du bord longitudinal haut du pare-brise. Il est couplé avec une caméra à l'arrière du véhicule.

L'invention a pour but de perfectionner ce vitrage feuilleté de véhicule à écran AMOLED notamment pare-brise à écran AMOLED.

A cet effet, la présente invention a pour objet un vitrage feuilleté de véhicule notamment pare-brise ou vitrage latéral de véhicule notamment routier, comportant :
- un premier vitrage, de préférence bombé, de préférence en verre minéral, de préférence teinté, notamment gris ou vert, avec une première face principale dite F1 destinée à être coté extérieur du véhicule et une deuxième face principale opposée dite F2, vitrage d'épaisseur E1 de préférence (surtout dans le domaine routier, pour une automobile) d'au plus 2,5mm, même d'au plus 2mm - notamment 1,9mm, 1,8mm, 1,6mm et 1,4mm- ou même d'au plus1,3mm ou d'au plus 1mm,
- un intercalaire de feuilletage en matière polymérique (clair, extraclair), de préférence thermoplastique, côté face F2, d'épaisseur (totale) E2 de préférence surtout dans le domaine routier, pour une automobile) d'au plus 2,2mm mieux d'au plus 2mm, d'au plus 1,5mm ou même d'au plus 0,76mm, par exemple composé de plusieurs feuillets par exemple 3 feuillets, notamment en retrait du chant du deuxième vitrage (d'au plus 5mm ou même d'au plus 2mm ou d'au plus 1mm)
- un deuxième vitrage, de préférence bombé (comme le premier vitrage), de préférence en verre minéral, avec une troisième face principale dite F3 côté intercalaire de feuilletage et une quatrième face principale opposée dite F4, notamment destinée à être côté intérieur du véhicule, éventuellement teinté (ou clair et même avec une couche électroconductrice en face F3), d'épaisseur E'1 de préférence inférieure à E1, même d'au plus 2,2mm (surtout dans le domaine routier, pour une automobile) - notamment 1,9mm, 1,8mm, 1,6mm et 1,4mm- ou même d'au plus1,3mm ou d'au plus 1mm, l'épaisseur totale des vitrages E1+E'1 étant de préférence (surtout dans le domaine routier, pour une automobile) strictement inférieure à 4,4mm, même à 3,7mm, l'un au moins -et mieux les deux- des premier et deuxième vitrages étant en verre, l'autre éventuellement en matière organique, polymérique comme un polycarbonate,
- entre la face F2 et la face F3, un premier écran de visualisation à diode électroluminescente organique dit écran AMOLED 3 flexible, comportant un ensemble de pixels, le premier écran AMOLED comportant une zone (centrale) d'affichage d'informations en dynamique, - l'écran AMOLED comportant un premier support flexible (matière polymérique verre, voire même métal) porteur de système(s) électroluminescent(s) organique(s) entre deux électrodes- et écran AMOLED d'épaisseur E3 inférieure à E2 de préférence subcentimétrique et même d'au plus 0,5mm, écran AMOLED ayant une face principale avant orientée vers F3 et une face principale arrière orientée vers F2, - l'écran AMOLED étant couvert par une épaisseur non nulle d'intercalaire de feuilletage -et de préférence au sein de l'intercalaire de feuilletage- donc avec une épaisseur non nulle E21 d'intercalaire de feuilletage entre la face arrière et F2 et/ou avec une épaisseur non nulle E22 entre la face avant et F3, E2 correspondant à l'épaisseur à côté de l'écran AMOLED (notamment E2 >à E21+E22 et sensiblement égale à E3), l'écran AMOLED est notamment agencé en périphérie,
- de préférence un élément de connexion électrique 4 de l'écran AMOLED, avec une partie dite de connectique entre la face F2 et la face F3, d'épaisseur E4 inférieure à E2 et de préférence subcentimétrique, avec une surface avant côté face F3 et une surface arrière côté face F2, partie de connectique couverte par une épaisseur non nulle d'intercalaire de feuilletage et même de préférence partie de connectique au sein de l'intercalaire de feuilletage (comme l'écran AMOLED) avec une épaisseur non nulle E41 d'intercalaire de feuilletage entre la surface arrière et la face F2 et avec une épaisseur non nulle E42 (de préférence identique à l'épaisseur E3) entre la surface avant et la face F3).

La partie de connectique est reliée (de préférence liaison permanente) à l'écran AMOLED et prolonge (directement) l'écran AMOLED en direction du chant du deuxième vitrage, et l'élément de connexion électrique flexible se prolongeant hors du chant du deuxième vitrage (via une partie dite extérieure).

L'élément de connexion en particulier est pour l'alimentation électrique et (de préférence)/ou transportant des signaux de données (simultanément ou séquentiellement) en particulier élément de connexion électrique comportant une ou des pistes d'alimentation électrique (« supply lines » en anglais) » et/ou une ou des pistes pour les signaux de données (« data lines » en anglais), et des composants électroniques (éventuellement en particulier dans la partie de connectique).

Le vitrage feuilleté de véhicule selon l'invention (de préférence pare-brise de véhicule routier et même automobile) comprend en outre entre la face F2 et la face F3 un premier capteur, d'épaisseur E6 inférieure à E2, couvert par une épaisseur non nulle E61 d'intercalaire de feuilletage, éventuellement au sein de l'intercalaire de feuilletage, le premier capteur étant agencé selon la configuration (a) suivante :
(a) entre la face F2 et la face arrière et/ou la surface arrière (en périphérie ou derrière la zone d'affichage)

L'écran AMOLED (transparent) est en outre dans le clair de vitre ou l'écran AMOLED est masqué par une couche de masquage en périphérie dite externe, opaque, entre la face F2 et la face arrière de l'écran AMOLED (de préférence en face F2 et une couche en émail) et la partie de connectique est également éventuellement masquée par la couche de masquage externe (même lorsque l'écran AMOLED est dans le clair de vitre , la partie de connectique peut être de préférence masquée par la couche de masquage externe).

Actuellement dans les pare-brises automobiles, les capteurs sont agencés en face F4 dans la zone du rétroviseur classique sous forme d'un miroir, en position centrale du bord longitudinal supérieur. Les capteurs sont masqués de l'intérieur par un boitier en face F4, ou dissimulés dans l'habillage du véhicule ou encore masqués par un émail rapporté en face F4.

Selon l'invention on agence le premier capteur (et un ou plusieurs autres capteurs) entre les deux vitrages à proximité ou sur l'écran AMOLED. Le premier capteur n'est plus saillant, est ainsi protégé et peut être en interaction avec l'écran AMOLED.

L'invention s'applique aussi bien lorsque :
- l'écran AMOLED est dans le clair de vitre et la partie de connectique est en périphérie (notamment opaque ou faiblement transparent et de préférence masquée de l'extérieur et/ou de l'intérieur) ou absente (l'élément de connexion étant absent du feuilleté, pouvant être « sans fil »)
- l'écran AMOLED et la partie de connectique sont en périphérie (notamment opaques ou faiblement transparents de préférence masqués de l'extérieur).

L'écran AMOLED (comme l'élément de connexion électrique éventuel) est de préférence au sein de feuilletage pour une meilleure tenue mécanique. Ainsi, l'intercalaire de feuilletage est alors présent à l'avant et à l'arrière de l'écran AMOLED (comme de l'élément de connexion éventuel) ce qui est avantageux par rapport à une solution dissymétrique dans laquelle l'écran AMOLED (comme l'élément de connexion éventuel) est rapporté (contre ou fixé par adhésif double face ou colle ou contact par adhérence) à la face F2 ou la face F3.

Pour les pare-brises en particulier de véhicule routier, les vitrages sont de préférences bombés et même suivant deux directions, et de préférence avec deux vitrages en verre minéral et même avec une intercalaire de feuilletage en PVB. Dans ce cas, l'écran AMOLED flexible s'adapte aux courbures comme l'éventuelle partie de connectique (et le premier capteur sur film flexible).

De préférence le vitrage feuilleté forme un pare-brise de véhicule routier tel qu'une automobile, un camion, avec les premier et deuxième vitrage en verre minéral bombés et même un intercalaire de feuilletage en PVB et un écran AMOLED au sein du feuilletage (tout comme la partie de connectique).

Selon la configuration a) l'écran AMOLED peut servir de blindage électromagnétique du premier capteur pour les ondes venant de l'intérieur du véhicule. S'il est opaque ou faiblement transparent, l'écran AMOLED sert aussi à masquer de l'intérieur le premier capteur. Un boitier de masquage du capteur n'est pas nécessaire en face F4. L'écran AMOLED opaque ou faiblement transparent est de préférence sombre, noir à l'état off. Le premier capteur ainsi masqué peut être non transparent (opaque, réfléchissant etc) car le plus simple ou être transparent et même quasi-invisible (pour être dans le clair de vitre). Il existe des capteurs transparents quasi invisibles mais réaliser un capteur suffisamment transparent peut être toutefois contraignant ou impossible pour certains types de capteurs. Ainsi, certains capteurs à fils sont miniaturisés ou opacifiés pour réduire leur visibilité mais des fils fins peuvent rester visibles et altérer la transparence du vitrage feuilleté de véhicule. Certains capteurs à couches transparentes peuvent aussi induire des distorsions optiques notamment à la frontière entre zone à couche et zone sans couche.

L'écran AMOLED ou la partie de connectique peut servir de support du premier capteur. Ils peuvent être ajoutés en post fabrication ou prévu au moment de la fabrication écran AMOLED ou partie de connectique.

Le premier capteur peut être sur le pourtour de l'écran AMOLED (dans le même plan ou en face F2 ou F3 ou au sein du feuilletage) et/ou de la partie de connectique (dans le même plan en face F2 ou F3 ou au sein du feuilletage), espacé ou accolé à la tranche de l'écran AMOLED ou de la partie de connectique ou même partageant un même support. Ainsi le premier capteur peut être intégré dans l'AMOLED et/ou dans la partie de connectique.

La partie extérieure de l'élément de connectique peut aussi comporter un capteur utile au vitrage (pare-brise etc), en regard du chant ou côté face F4.

L'écran AMOLED peut être opaque ou transparent. L'écran AMOLED transparent (dans le clair de vitre en zone périphérique ou non) est de préférence défini par une transmission lumineuse (TL) de la zone du vitrage feuilleté le comprenant au moins égale à 70%.

L'écran AMOLED moins transparent (destiné à être toujours en périphérie) est de préférence défini par une transmission lumineuse (TL) de la zone du vitrage feuilleté le comprenant inférieure à 20% ou même à 10%.

Un écran AMOLED opaque peut être défini comme ayant une TL nulle (par exemple par ajout d'une couche ou peinture -métallique... - à l'arrière du substrat porteur du système AMOLED).

Dans un premier mode de réalisation, l'écran AMOLED est opaque ou transparent avec une transmission lumineuse TL inférieure à 10% et même inférieure à 5% et/ou la partie de connectique est opaque ou de transmission lumineuse TL inférieure à 10% et même à 5%.

Dans la configuration a), le premier capteur est masqué de l'extérieur par ladite couche de masquage externe, ou en regard d'une aire de détection correspondant à une ouverture de la couche de masquage externe.

Dans le cas d'un pare-brise en particulier (notamment véhicule routier), cet écran AMOLED -de préférence en configuration a) - peut être agencé en périphérie et de préférence en zone centrale du bord longitudinal supérieur en particulier dans une zone ou la largeur de la couche de masquage externe est de largeur L1 plus grande que sa largeur L0 côté conducteur et/ou copilote.

Cela permet d'agencer un écran AMOLED (opaque ou faiblement transparent) de plus grande taille notamment avec une plus grande hauteur H3 (dimension suivant la verticale). L'écran AMOLED peut aussi être plus vers le centre (bord au plus proche de la frontière.

On peut aussi ajuster la largeur W3 ou la largeur H3 pour que le premier capteur soit à côté de l'écran AMOLED dans une zone de la couche de masquage externe (avec ouverture) ou sans couche de masquage externe (mais avec une faible TL acceptée)

En configuration a), l'écran AMOLED peut masquer de l'intérieur le premier capteur par tout moyen : couche (dépôt ou film rapporté) en face arrière, électrode, support opaque, matière de protection diélectrique (résine, vernis ; film etc) en face arrière ou en périphérie avant de la zone d'affichage. En configuration a), la partie de connectique peut masquer de l'intérieur le premier capteur par tout moyen : couche (dépôt ou film rapporté) en face arrière, électrode, support opaque, matière de protection diélectrique (résine, vernis ; film etc) en face arrière ou en périphérie avant de la zone d'affichage.

Alternativement, l'écran AMOLED est dans le clair de vitre (zone périphérique sans masquage arrière ou zone B réduite) et :
- dans la configuration a), dans la zone avec le premier capteur et l'écran AMOLED ou la partie de connectique, la transmission lumineuse du vitrage feuilleté est d'au moins 70%.

Le premier capteur est alors également transparent même quasi-invisible (pour être dans le clair de vitre).

De préférence, le premier capteur est dans une zone de balayage d'un ou des essuie-glaces du pare-brise de véhicule routier tel qu'une automobile, un camion.

Bien sûr on peut prévoir une pluralité de premiers capteurs en (a), les uns à côté des autres, sur le premier vitrage, ou même directement sur l'écran AMOLED ou la partie de connectique, sur un même support ou non, comme un support polymérique voire une lame de verre.

Le premier capteur est choisi de préférence parmi l'un au moins des capteurs suivants :
- un détecteur de pluie (de préférence dans la zone d'essuie-glace) typiquement de taille de 100mm² à 600mm²
- une caméra dans le visible (détecteur anti -collision, détecteur d'objet ou de personne en mouvement ou non.) ou à infrarouge (vision de nuit, détecteur anti -collision détecteur d'objet ou de personne en mouvement ou non, par exemple de forme trapézoïdale, et même plusieurs caméras du même type pour une vision stéréoscopique
- un ou plusieurs (typiquement 6) capteurs de lumière, comme une photodiode, typiquement de taille de 1,2×1,4mm² à 1,4 × 1,8mm²
- un thermomètre, thermocouple typiquement un fil d'épaisseur 0,5mm ou moins
- un capteur d'alarme (détection d'un défaut d'intégrité du vitrage etc), typiquement de taille de fil conducteur de 12 à 150µms de diamètre ou par une couche électroconductrice (en face F2 ou F3)
- un détecteur de buée et lié à un élément chauffant (résistif etc) -comme un antibuée, anti-condensation, anti-gel-, typiquement de taille de 100-200 cm² par exemple intégré dans un détecteur de pluie
- un capteur formant antenne, par exemple un fil conducteur d'épaisseur de 12µm à 0,5mm typiquement, pour recevoir et/ou transmettre des ondes électromagnétiques (radio, TV notamment réseau local de communication comme le BLUETOOTH, le WIFI, le WLAN), notamment au sein du feuilletage ou noyé dans une matière polymérique (film etc)
- un capteur acoustique (à base d'un élément piézoélectrique)
- un détecteur de signal ultrasonore de préférence sur la face F2, (par exemples à base d'un élément piézoélectrique)
- un capteur de diagnostic (défauts du vitrage feuilleté de véhicule notamment pare-brise ou vitrage latéral) à base d'une couche électroconductrice (pleine surface)
- un détecteur de commande (essuie-glace, etc), par exemple commande IR ou commande vocale (piézoélectrique).

Dans un mode de réalisation, le premier capteur ou un autre capteur est un capteur de couplage, couplé fonctionnellement à l'écran AMOLED commandant au moins un paramètre d'affichage et/ou des données d'image et éventuellement en face F4.

Le capteur de couplage peut être agencé selon la configuration (a) ou encore hors verre feuilleté à proximité du pare-brise (tableau de bord, avant de la carrosserie)

Comme un paramètre d'affichage on peut citer :
- luminosité, contraste, volume sonore, zoom, on/off en cas d'alertes (accidents route, embouteillages, déviation, intempérie, message police, ...), et/ou on/off en cas d'appel téléphonique
- données d'image : sélection du canal d'informations, du type d'informations : sécurité, environnemental, géographique...

Le capteur de couplage est choisi de préférence parmi l'un au moins des capteurs suivants :
- une caméra dans le visible ou à infrarouge (vision de nuit, détecteur anti -collision détecteur d'objet ou de personne en mouvement ou non devant), l'écran d'affichage nous permettant de voir l'avant.
- un détecteur de buée et lié à un élément chauffant notamment en face F4, pour bien voir l'écran AMOLED
- un capteur formant antenne pour recevoir et/ou transmettre des ondes électromagnétiques (radio, TV.., notamment réseau local de communication comme le BLUETOOTH, le WIFI, le WLAN) pour l'écran AMOLED
- un détecteur de commande vocale pour l'écran AMOLED (transducteur etc). Naturellement on peut avoir une pluralité de capteurs de couplage.

Le terme capteur est pris au sens large peut être une ou des couches conductrice ou même tout type de composant électronique voire optoélectronique, des photodétecteurs, ou même électromécaniques : des modules piézoléectriques, des MEMS (pour Microelectromochanical structure). Ces composants peuvent se présenter sous toute forme, par exemple montés en surface ( connus sous le nom « CMS ») ou tout autre type de package ou sous forme de puces. On peut utiliser tout type de support porteur du capteur par exemple isolant électrique : polytéréphtalate d'éthylène PET, polytétrafluoroéthylène (téflon), époxy, fibres de verre, laine de verre, polyester, papier de coton ou FR-1, -2, -3, -4, -5, -6, CEM-1, -2, -3, -4, -5 et éventuellement avec une couche de métal formant dissipateur thermique.

Le support de capteur peut être transparent surtout s'il n'est pas masqué ainsi que les conducteurs d'alimentation électrique de capteurs. Il s'agit de pistes de largeur adaptée, de matière électroconductrice transparente : empilement de couches minces à l'argent ou encore de couche d'oxyde conducteur transparent (ITO, ATO etc). Ce support peut être une carte de circuit imprimé obtenus par attaque sélective d'un conducteur métallique (cuivre etc)

Le premier capteur (ou tout capteur) peut être lui-même (ainsi que les conducteurs d'alimentation électrique) sur un support flexible (mince) distinct ou non de la partie de connectique, dans le même plan ou non que ladite partie de connectique.

Il existe différents type de capteurs : capacitif, résistif, inductif.

Naturellement on préfère également masquer les connexions et alimentations électriques du premier capteur.

Naturellement une caméra peut tirer bénéfice d'un capteur de chauffe pour éviter la buée.

Les signaux d'antenne (radiofréquence, fréquence micro-onde, HF, UHF) sont par exemple pour le télépéage ou issus d'un réseau local de communication comme le BLUETOOTH, le WIFI, le WLAN.

Le capteur capacitif fonctionne avec une unité d'analyse et de traitement des signaux tel un circuit électronique voire une puce de qq mm² au plus, également maqué de l'extérieur et au voisinage du premier capteur (capteur de couplage). On évite toute capacité parasite.

Par exemple un capteur comporte trois électrodes utilisées pour des mesures dites différentielle ou encore avec au moins deux électrodes, chaque électrode et relié à un conducteur les alimentant (de petites dimensions par rapport aux électrodes), conducteurs par exemple espacés d'au plus 1mm. Conducteur et électrode peuvent être en même matériau par exemple avec un film conducteur métallique de résistance carré d'au plus 10 ohm/carré voire même d'au plus 5ohm/carré.

Par exemple un capteur comprend deux électrodes concentriques, chacune comprenant deux secteurs de forme générale annulaire, reliées respectivement à des conducteurs. Les électrodes et leurs conducteurs sont également réalisés dans une couche conductrice découpée. Les conducteurs sont reliées à un ensemble de traitement. Les conducteurs entre les électrodes annulaires et les extrémités de jonction avec le dispositif d'alimentation et de traitement des signaux, sont écartés l'un de l'autre d'une distance d qui de l'ordre de la dimension du capteur. Le mode de fonctionnement est celui décrit précédemment. La fréquence d'analyse de la charge des électrodes est fixée à 33Hz. Pour améliorer encore le rapport «signal/ bruit» une bande périphérique de la couche conductrice est mise à la terre.

Les éléments conducteurs formant le capteur et le support éventuel sont par exemple insérés dans le vitrage dans une zone sans masquage interne et/ou externe. Ils sont alors de matériaux essentiellement transparents pour ne pas rompre de façon significative l'aspect visuel du vitrage. De façon préférée le support et le capteur, constitué dans des couches conductrices appliquées sur ce support, sont choisis de sorte qu'ils présentent une transmission lumineuse déterminée selon la norme EN 410 qui n'est pas inférieure à 70% et de préférence pas inférieure à 80%.

Les supports utilisés pour les capteurs en particulier capacitifs doivent s'insérer aisément dans le vitrage. Ils sont de préférence d'épaisseur aussi faible que le permet leur fonction. Si le support ne comporte que le capteur, un film flexible par exemple de polytéréphtalate d'éthylène dit PET, revêtu des couches conductrices peut être utilisé. Dans ce cas l'épaisseur peut être particulièrement faible, de quelques centièmes de millimètres. L'insertion d'un support se fait de façon privilégiée à partir d'un bord du vitrage.

La combinaison d'ensembles fonctionnels différents dans un même vitrage, tous alimentés électriquement, engendre inévitablement des champs qui peuvent perturber le fonctionnement du capteur capacitif. Pour écarter ou au moins minimiser ces influences parasites, le capteur capacitif est avantageusement construit de manière à opérer une discrimination accrue des signaux émis par le capteur. A cet effet le capteur comprend un ensemble de deux électrodes situées au voisinage l'une de l'autre. Pour éviter que la mise en place d'éléments multiples, notamment des conducteurs reliant le capteur à une unité de traitement située hors du vitrage, ne complique la structure et l'assemblage du vitrage, ces conducteurs sont avantageusement constitués dans la même couche que celle des électrodes du capteur capacitif, et offrent aussi de ce fait la même transparence si nécessaire. Eventuellement d'autres conducteurs peuvent aussi être utilisés, notamment des fils de très petit diamètre et par suite peu discernables.

Les produits conducteurs électriques transparents qui peuvent être utilisés selon l'invention pour constituer le capteur sont bien connus dans le domaine verrier. Ils sont constitués de couches suffisamment minces d'oxydes conducteurs, ou de couches métalliques ces dernières disposées dans des ensembles de couches diélectriques de protection.

Parmi les couches d'oxydes (TCO) les plus conductrices, figurent en particulier les couches à base d'oxyde d'indium dopé à l'oxyde d'étain (ITO). Ces couches sous des épaisseurs répondant à la condition de transparence, permettent d'atteindre des résistances de moins de 50Ω/α et de préférence de moins de 30Ω/α et particulièrement inférieure à 20 Ω/α. La résistance électrique des couches est nécessairement fonction de leur épaisseur. Une augmentation de l'épaisseur permet de réduire la résistance mais se heurte à la nécessité de conserver une bonne transparence. Pour les couches de type ITO un niveau d'absorption acceptable correspond à des couches dont l'épaisseur ne dépasse pas 300nm, et de préférence 200nm.

Tous les constituants compris dans les vitrages bombés doivent pouvoir supporter ces courbures, d'où la nécessité d'utiliser des supports des capteurs suffisamment flexibles. Par ailleurs lorsque les supports des capteurs présentent une épaisseur non négligeable par exemple d'au moins 0,15mm et même d'au moins 0,2mm, il est préférable pour faciliter l'assemblage, de disposer ces supports dans une réserve correspondante pratiqué dans une feuille intercalaire de feuilletage d'épaisseur analogue constituant ainsi une sorte de cadre pour le support.

Dans un mode de réalisation, le premier capteur (et son alimentation électrique) peut être une pièce rapportée, notamment collée, sur la face arrière et/ou la surface arrière ou même sur la surface avant ou encore sur la face F2
- par exemple un ou des fils électroconducteurs (noyés ou non dans une résine)
- ou encore un élément conducteur (couche électroconductrice) sur un support polymérique flexible (tq PET, PC etc).

Dans un mode de réalisation, le premier capteur (et son alimentation électrique) est sur la face F2, sur la couche de masquage externe en face F2 ou dans l'aire de détection (ouverture(s) de la couche de masquage externe).

En particulier, la couche de masquage externe, de préférence en émail, est en face F2 et notamment le premier capteur est en émail électroconducteur sur le premier émail de masquage et même masqué par la couche de masquage interne. En particulier, la couche de masquage interne, de préférence en émail, est en face F3 et notamment le premier capteur est en émail électroconducteur sur le cette couche.

Dans un deuxième mode de réalisation, le premier capteur (et son alimentation électrique) comporte une couche conductrice à l'avant ou l'arrière de l'écran AMOLED ou de la partie de connectique, ou encore une couche conductrice sur la face F2 ou face F3.

Le premier capteur peut être susceptible de créer une pression locale nuisible sur la face arrière (ou avant) de l'écran AMOLED, toute variation d'épaisseur même très faible créant souvent des déformation visibles en réflexion , par exemple de par son épaisseur E6 (maximale) trop importante et sa conception (utilisation de pièce(s) rapportées plutôt que de couches) on peut prévoir :
- d'adapter l'épaisseur du premier support flexible de l'écran AMOLED
- une compensation en épaisseur sur toute la surface en regard de part et d'autre du ou des capteurs
- ou décaler le premier capteur hors zone AMOLED.

Dans une réalisation le vitrage feuilleté de véhicule comporte en face F2 ou en face F3 ou F4 une couche électroconductrice transparente formant antenne :
- si en face F3 en regard de la face avant
- ou si en face F3 absente de la zone en regard de la face avant, notamment en zone périphérique à la zone d'affichage d'informations et même à l'écran AMOLED et à la couche de masquage externe.

On peut avoir une zone en face F4 qui est un capteur formé à partir d'une couche électroconductrice transparente par exemple en oxyde transparent conducteur (ITO par exemple seul ou dans un empilement). Par exemple le capteur est un élément d'antenne (pour des signaux venant de l'intérieur et/ou de l'extérieur).

Cette couche locale peut être chauffante et antibuée en regard de la zone d'affichage. Cette couche peut aussi être en périphérie et porter un capteur dans une zone recouverte d'un boitier ou sous la garniture

Selon l'invention le capteur peut être masqué ou dans une zone de vision et être associé à un ou des composants électroniques (amplificateur, décodeur, câble d'alimentation électrique etc) de préférence hors zone de vision (boitier en face F4 ou sous la garniture ou le long de la tranche du vitrage ou dans le tableau de bord).

De préférence, la couche de masquage externe est en émail et en face F2 derrière l'écran AMOLED et le ou les éventuels autres écrans AMOLED.

A l'état off, il est possible de ne pas distinguer la zone d'écran AMOLED de la zone de masquage plus en arrière. On peut prévoir adapter la couleur de la couche de masquage externe (émail notamment, en face F2) en conséquence.

Dans une réalisation, l'écran AMOLED est transparent et dans le clair de vitre ou en ce que l'écran AMOLED (transparent ou opaque) est masqué par une couche de masquage dite externe entre la face arrière de l'écran AMOLED et la face F2 (, et/ou l'élément de connexion électrique est masqué de l'extérieur notamment par une couche de masquage dite externe entre la surface arrière et la face F2 et le ou les bords techniques de l'écran AMOLED ainsi que l'élément de connexion sont masqués de l'intérieur par une couche de masquage dite interne en face F3 ou F4

Dans une réalisation, le vitrage feuilleté comporte une pluralité d'écrans AMOLEDS, notamment en périphérie d'un même bord longitudinal ou latéral.

Dans une réalisation préférée, l'écran AMOLED couvre au plus toute la zone périphérique visible par le conducteur (ou copilote si écran AMOLED de son côté) dans le pare-brise de véhicule routier (automobile) jusqu'au bord de la zone centrale de vision transparente et plus précisément :
- jusqu'au bord supérieur de la zone centrale de vision transparente si l'écran AMOLED est agencé en haut de manière horizontale côté conducteur (ou copilote si écran AMOLED de son côté) le long du bord longitudinal supérieur côté conducteur (ou passager)
- jusqu'au bord inférieur de la zone centrale de vision transparente si l'écran AMOLED est agencé en bas de manière horizontale côté conducteur (ou copilote si écran AMOLED de son côté) le long du bord longitudinal inférieur côté conducteur (ou passager)
- jusqu'au bord supérieur de la zone centrale de vision transparente si l'écran AMOLED est agencé en haut de manière horizontale ou verticale dans la zone centrale du bord longitudinal supérieur
- jusqu'au bord gauche de la zone centrale de vision transparente (respectivement droite) si l'écran AMOLED est agencé de manière verticale à gauche de préférence côté conducteur (respectivement droite de préférence côté copilote) le long du bord latéral gauche, de préférence en partie basse (moitié inférieure du bord latéral) pour être plus larges.

Il en est de même pour ledit ou lesdits autres écrans AMOLED - si opaques ou faiblement transparent de préférence masqués par la couche de masquage externe, de préférence en face F2-.

Les bords (ou limites) supérieur, inférieur, latéraux (gauche et droite) de la zone de vision centrale transparente sont notamment définis par une norme de régulation. Par exemple pour un pare-brise de véhicule routier, automobile, il s'agit de la zone B réduite définie selon la norme européenne UN-ECE R43 annexe 18, en particulier page 133 et § 2.4. La limite supérieure de la zone centrale de vision transparente est de préférence définie à partir d'un angle entre l'horizontale et 7° à partir d'un point de référence (l'œil du conducteur, oeil à la hauteur Z par rapport au siège du véhicule avec Z= 665mm pour un grand conducteur ou Z=589mm pour un petit conducteur.

A partir du bord concerné du vitrage feuilleté notamment pare-brise de véhicule routier, on définit les distances suivantes :
- h1 distance entre le bord supérieur et la limite supérieure de la zone périphérique de vision du conducteur (ou du copilote si écran AMOLED de son côté) dans le véhicule, de préférence d'au moins 15mm et même d'au moins 50 ou 90mm
- h'1 distance entre le bord inférieur et la limite inférieure de la zone périphérique de vision du conducteur (ou du copilote si écran AMOLED de son côté) dans le véhicule de préférence d'au moins 40mm et même d'au moins 100 ou 200mm
- h4 distance entre le bord latéral (gauche ou droit) et la limite latérale de la zone périphérique de vision du conducteur (ou du copilote si écran AMOLED de son côté) dans le véhicule de préférence d'au moins 15mm et même d'au moins 20 ou 40mm.

Hors zone de l'écran AMOLED (et/ou desdits autres écrans AMOLED) on peut former une couche de masquage périphérique externe (en face F2) comme l'émail, du chant jusqu'à h1, h'1, h4 en dépassant par exemple de la zone de vision (prédéterminée) d'au plus 2cm comme classiquement.

Selon l'invention on peut augmenter à façon la largeur de la couche de masquage externe pour masquer l'écran AMOLED (et le ou lesdits autres écrans AMOLED) et au maximum jusqu'aux limites de la zone centrale de transparence. Le masquage externe est donc possible à partir de la limite de zone de vision B réduite jusqu'au bord du (premier) vitrage. En fonction du bord concerné du vitrage feuilleté notamment pare-brise de véhicule routier, on définit les distances suivantes :
- h2 distance entre le bord supérieur et la limite supérieure de la zone centrale de transparence côté conducteur (ou copilote si écran AMOLED de son côté), de préférence d'au moins 120mm et même de plus de 150mm ou 200mm ou 220mm, l'écran AMOLED étant au-dessus de ladite limite supérieure et même le(s) éventuel(s) autre(s) écran(s) AMOLED
- h'2 distance entre le bord inférieur et la limite inférieure de la zone centrale transparence côté conducteur (ou copilote si écran AMOLED de son côté) de préférence d'au moins 120mm et même de plus de 150mm ou 300mm et l'écran AMOLED étant en-dessous de ladite limite inférieure ainsi que de préférence le(s) éventuel(s) autre(s) écran(s) AMOLED
- Hₐ distance entre le bord supérieur et la limite supérieure de la zone centrale de transparence dans la partie centrale (pour écran AMOLED en position centrale), de préférence d'au moins 180mm et même d'au moins 250mm ou 300mm et l'écran AMOLED étant entre le bord et la limite supérieure ainsi que de préférence le(s) éventuel(s) autre(s) écran(s) AMOLED
- h5 distance entre le bord latéral (gauche ou droit) et la limite latérale de la zone centrale de transparence côté conducteur (ou côté copilote si écran AMOLED de son côté) de préférence d'au moins 80mm et même de plus de 120 ou 150mm, et l'écran AMOLED étant entre le bord latéral et ladite limite latérale ainsi que de préférence le(s) éventuel(s) autre(s) écran(s) AMOLED.

La hauteur h6 de la zone B réduite en position haute (entre la zone potentiellement opaque et la zone A la plus centrale) peut être de 60mm à 90mm. Elle peut servir pour un écran AMOLED (assez) transparent (qui peut remonter dans la zone potentiellement opaque). De préférence la couche de masquage externe est plus haute que l'écran AMOLED. La hauteur h'6 de la zone B réduite en position basse (entre la zone potentiellement opaque et la zone A plus la centrale) peut être entre 60mm et 90mm. Elle peut servir pour un écran AMOLED (assez) transparent (qui peut descendre dans la zone potentiellement opaque). De préférence la couche de masquage externe est plus basse que l'écran AMOLED.

La zone de couche de masquage externe est de préférence au moins aussi grande que la surface de l'écran AMOLED, de préférence un peu plus grande :
- par exemple d'au moins 5mm de chaque côté de l'écran AMOLED
- et/ou par exemple d'au moins 5mm sous le bord le plus central (bord bas si position en haut de l'écran AMOLED, bord bas si position en bas de l'écran AMOLED)

La couche de masquage externe peut être une zone pleine (aplat) prolongée par une zone discontinue en réseau de motifs (géométriques, forme ronde, carré, rectangulaire etc) de préférence en dégradé en direction du centre du vitrage feuilleté (pare-brise). Le dégradé peut être de largeur d'au plus 15mm et même d'au plus 10mm et d'au moins 3 ou 5mm. Le dégradé peut être dans la zone du bord longitudinal inférieure de largeur d'au plus 30mm et même d'au plus 25mm et d'au moins 10 ou 15mm. De préférence l'écran AMOLED n'est pas derrière le dégradé mais derrière la zone pleine. A la limite seul le dégradé peut dépasser de l'écran AMOLED.

On peut avec plusieurs zones de masquages élargies le long d'un bord de référence ou de bords distincts et même une zone de masquage élargie dédié donc pour chaque écran AMOLED.

Le vitrage feuilleté notamment un pare-brise de véhicule routier (automobile) de forme rectangulaire peut être :
- de largeur (dimension horizontale) Lp d'au moins 1200mm et d'au plus 1850mm et de préférence de 1350 à1550mm.
- de hauteur (dimension verticale) Hp d'au moins 800mm et d'au plus 1400mm et de préférence de 950 à 1050mm.

De préférence l'écran AMOLED (dans un pare-brise de véhicule routier, automobile) est au moins de 80mm par 120mm.

De préférence on ajuste la hauteur H3 (et W3) de l'écran AMOLED dans un pare-brise de véhicule routier, automobile) en fonction de la norme en vigueur.

De préférence la largeur W3 de l'écran AMOLED dans un pare-brise de véhicule routier, automobile) agencé horizontalement en position haute (bord supérieur) est d'au moins 100mm et mieux d'au moins 120mm et même supérieure à 200mm, à 350mm, et même supérieure ou égale à 500mm, notamment ou sur toute la zone côté conducteur entre un premier bord latéral visible et la zone centrale haute (et même tout ou partie de zone centrale haute inclus) ou toute la zone côté copilote entre le deuxième bord latéral visible et la zone centrale haute (et même tout ou partie de zone centrale haute inclus).

De préférence la hauteur H3 de l'écran AMOLED dans un pare-brise de véhicule routier, automobile) agencé horizontalement en position haute (bord supérieur) est d'au moins 80mm et mieux d'au moins 100mm

De préférence la largeur W3 de l'écran AMOLED dans un pare-brise de véhicule routier, automobile) agencé horizontalement en position basse (bord inférieur) est d'au moins 100mm et mieux d'au moins 120mm et même supérieure à 200mm, à 350mm et même supérieure ou égale à 500mm, notamment ou sur toute la zone côté conducteur entre le bord latéral visible et une zone du milieu (et même tout ou partie de zone centrale basse inclus)) ou toute la zone côté copilote entre le deuxième bord latéral visible et la zone centrale basse (et même tout ou partie de zone centrale basse inclus)

De préférence la hauteur H3 de l'écran AMOLED dans un pare-brise de véhicule routier, automobile) agencé horizontalement en position basse (bord inférieur) est d'au moins 80mm et mieux d'au moins 100mm.

De préférence la largeur W3 de l'écran AMOLED dans un pare-brise de véhicule routier, automobile) agencé verticalement en position haute (bord supérieur) dans la zone centrale est d'au moins 100mm et mieux d'au moins 120mm jusqu'à 280mm ou même 300mm

De préférence la hauteur H3 de l'écran AMOLED dans un pare-brise de véhicule routier, automobile) agencé verticalement en position haute (bord supérieur) dans la zone centrale est d'au moins 80mm et mieux d'au moins 100mm et même d'au moins 150mm et jusqu'à 200mm.

L'élément de connexion peut être « sans fil ».On préfère toutefois un connecteur (plat) flexible selon l'invention pour le transport des signaux de puissance et/ou de données à un ou des connecteurs sans fil (« wireless ») par induction ou capacitif etc. L'élément de connexion électrique de préférence d'épaisseur submicronique E4 sensiblement égale à E2 et d'épaisseur E'4 inférieure à E4 au-delà du chant du deuxième vitrage, est de préférence courbé et contre ou mieux fixé par collage en face F4 sans s'étendre jusqu'à la zone d'affichage. La partie extérieure est de préférence courbée, s'étend du côté de la face F4 et est contre ou mieux fixé par collage en face F4 sans s'étendre jusqu'à la zone d'affichage.

L'élément de connexion est avantageusement partiellement recouvert ou enrobé, le cas échéant, de tout matériau pour en augmenter l'épaisseur à une valeur essentiellement égale à celle de l'écran AMOLED notamment jusqu'au bord du vitrage feuilleté. L'élément de connexion est de préférence un circuit imprimé flexible (« fpc » en anglais). L'élément de connexion est de préférence capable d'adresser un grand nombre de pixels.

L'élément de connexion électrique flexible (notamment la partie de connectique) peut être de largeur inférieure ou sensiblement égale à celle de l'écran AMOLED, typiquement de largeur de 50mm pour de largeurs (dimension horizontale) d'AMOLED d'au moins 100mm et même de plus de 150mm. Les grands (larges) écrans peuvent avoir plusieurs éléments de connexion électrique flexibles de préférence sur un même bord de l'écran AMOLED.

La distance entre la terminaison de l'élément de connexion électrique et le chant du deuxième vitrage est suffisamment grande pour que cette terminaison soit accessible lors du montage ou du démontage. La longueur totale (dépliée) est ajustée pour l'élément de connexion soit plié autour du deuxième vitrage et fixée en face F4. A partir de la sortie du verre intérieur on prévoit de préférence une distance de 20 à 150mm.

Dans une réalisation, l'élément de connexion électrique (notamment la partie de connectique) comporte :
- un support flexible de préférence polymérique transparent ou non (comme un PET etc) avec première face avant et première face arrière, des fils ou de préférence des pistes conductrices côté avant ou arrière,
- éventuellement des composants électroniques comme des transistors
- les fils ou pistes (et composants électroniques ) étant couvertes par une matière électriquement isolante, telle une couche de résine ou vernis (dépôt liquide etc) ou un film de protection transparent ou non (PET, polyimide etc) par exemple adhésivé,

La partie de connectique peut être reliée par tout moyen connu à l'écran AMOLED : clipsage, enfichage. De préférence la partie de connectique et l'écran AMOLED sont reliés par une ou des liaisons (solides) permanentes. Une liaison entre la partie de connectique et l'écran AMOLED peut se faire sur un bord technique de l'écran AMOLED.

De préférence, comme film polymérique flexible on choisit un polyéthylène téraphtalate PET, un polyimide, un polyester, un poly(chlorure de vinyle) PVC, un polycarbonate, polyétheréthercétone (PEEK), un acrylate, ceci pour l'un au moins des éléments suivants :
- l'écran AMOLED (substrat, film de protection arrière ou avant : film de façade etc),
- l'élément de connexion électrique notamment la partie de connectique (substrat, film de protection arrière ou avant).

Le deuxième vitrage comporte de préférence une encoche locale. L'élément de connexion sort du chant du deuxième vitrage via l'encoche de largeur de préférence d'au moins la largeur de l'élément de connexion et de préférence d'au plus la largeur de l'écran AMOLED (non inclus les rayons du façonnage).

Les dimensions de l'encoche sont donc adaptées:
- largeur de l'encoche supérieure ou égale à celle de l'élément de connexion;
- profondeur de l'encoche supérieure ou égale à l'épaisseur de l'élément de connexion pour éviter qu'il soit visible de l'extérieur en cas de bord apparent.

En pratique la profondeur de l'encoche est de préférence de 1,5mm à 3 ou même à 2mm.

La zone d'encoche est de préférence dépourvue (sensiblement) d'intercalaire de feuilletage.

L'intercalaire de feuilletage en matière polymérique est choisie parmi les polyvinylbutyral, éthylène - acétate de vinyle, polyuréthane ou résine ionomère, seuls ou en mélanges de plusieurs variétés de l'un d'eux et/ou de plusieurs d'entre eux ; le terme « variétés » fait ici référence à des variations du taux de plastifiant, de ramifications/linéarité, masse moléculaire moyenne des molécules...

Pour assurer une bonne étanchéité à l'eau, il entoure et est en contact avec l'écran AMOLED (tranche et face avant et arrière) voire même de l'élément de connexion électrique de type connecteur plat.

L'intercalaire de feuilletage lui peut être en en polyvinylbutyral (PVB), en polyuréthane (PU), en copolymère éthylène/acétate de vinyle (EVA), formé à partir d'un ou plusieurs films, ayant par exemple une épaisseur entre 0,2mm et 1,1mm.

La surface de l'intercalaire de feuilletage peut être inférieure à la surface du vitrage feuilleté, par exemple laissant une gorge (en cadre ou en bandeau), libre donc non feuilletée.

Le premier vitrage comme le deuxième vitrage peut être parallélépipédique, avec des feuilles ou des faces principales rectangulaires, carrées ou même de toute autre forme (ronde, ovale, polygonale).

Le premier et/ou deuxième vitrage peut (selon le rendu esthétique, l'effet optique souhaité) être un verre clair (de transmission lumineuse T_{L} supérieure ou égale à 90% pour une épaisseur de 4mm), par exemple un verre de composition standard sodocalcique comme le Planilux^{®} de la société Saint-Gobain Glass, ou extra-clair (T_{L} supérieure ou égale à 91,5% pour une épaisseur de 4 mm), par exemple un verre silico-sodo-calcique avec moins de 0,05% de Fe III ou de Fe₂O₃ comme le verre Diamant^{®} de Saint-Gobain Glass, ou Optiwhite^{®} de Pilkington, ou B270^{®} de Schott, ou d'autre composition décrite dans le document WO04/025334.

Le verre du premier et/ou deuxième vitrage peut être neutre (sans coloration), ou (légèrement) teinté notamment gris ou vert, telle verre TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.

La transmission lumineuse T_{L} peut être mesurée selon la norme ISO 9050 :2003 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.

Pour un vitrage feuilleté de véhicule notamment pare-brise ou vitrage latéral, la T_{L} peut être de préférence d'au moins 70% et même d'au moins 75% ou 80%.

Dans une réalisation le premier vitrage est en verre minéral et le deuxième vitrage est en verre organique (comme le PC, le PMMA, le copolymère cyclo-oléfine (COC) ou encore le polyéthylène téraphtalate (PET) éventuellement protégé par un revêtement (en face F4).

Le vitrage extérieur peut comporter des couches minces fonctionnelles sur l'une ou l'autre de ses faces F1 et F2 ou bien les deux : on peut citer une couche hydrophobe ou autonettoyante photocatalytique en face F1.

De préférence le vitrage feuilleté forme un pare-brise de véhicule routier tel qu'une automobile, un camion, avec les premier et deuxième vitrage bombés et même un intercalaire de feuilletage en PVB. Le bombage des premier et deuxième vitrages (pare-brise) peut être dans une ou plusieurs directions par exemple comme décrit dans le document WO2010136702.

L'écran AMOLED peut avoir de préférence une épaisseur d'au plus 0,8 mm, de préférence au plus égale à 0,7mm, et de manière particulièrement préférée au plus égale à 0,6 mm et même d'au moins 0,15mm.

L'écran AMOLED comporte de préférence un support flexible (polymérique, verre voire un métal) porteur d'une électrode dite inférieure (souvent l'anode) d'un système électroluminescent organique et d'une électrode supérieure, en incluant une matrice de transistors en couches minces ('TFT' en anglais). D'autres éléments ou couches fonctionnelles sont possibles notamment :
- entre le support et l'électrode inférieure et sous forme de dépôt ou de film : couche barrière (à l'oxygène, l'humidité etc),
- sur l'électrode supérieure et sous forme de dépôt ou de film : couche de protection (à l'oxygène, l'humidité etc), par exemple dépôt (vernis, enrobage, en résine etc) et/ou film de façade (film polymérique transparent : PET etc).

Plus précisément le pixel comporte de préférence cote à cote deux ou trois des systèmes suivants :
- un système électroluminescent organique émettant dans le rouge dit « R »,
- un système électroluminescent organique émettant dans le vert dit « G »,
- un système électroluminescent organique émettant dans le bleu dit « B »,
- un système électroluminescent organique émettant dans le blanc dit « W » ;
en particulier RGB,RWB,WBG,RWB,W,BG.

Le nombre de pixels est d'au moins 64x128. L'émission est de type top émitting (émission à l'opposé du substrat). On entend par face avant la face de visualisation.

On peut prévoir des moyens de modulation de la puissance de l'écran AMOLED selon au moins deux configurations : une configuration pour la vision nocturne, dans laquelle la puissance de l'écran AMOLED est ajustée pour que la luminance soit typiquement comprise entre environ 10 et environ 400Cd/m² et une configuration pour la vision diurne, dans laquelle la puissance de l'écran AMOLED est ajustée pour que la luminance soit typiquement comprise entre environ 10 et environ 500Cd/m². En vision diurne, on peut aussi ajuster la luminance de l'écran AMOLED en fonction de l'éclairement extérieur.

Toutes informations peuvent être affichées sur l'écran AMOLED (notamment sur un pare-brise): conditions atmosphériques extérieures et intérieures, vision de l'environnement arrière, vision de l'environnement latéral gauche et droite (come déjà indiqué), informations liées aux conditions de conduite et panneaux de signalisation, informations techniques relatives au véhicule de transport.

L'écran AMOLED en particulier peut avoir l'une ou les fonctions suivantes (cumulables)
- vison centrale de l'arrière
- affichage d'informations d'aide à la conduite, en particulier alerte, détection d'obstacles,
- affichage d'informations (niveaux, état de fonctionnement, d'usure, etc) sur les caractéristiques du véhicule (moteur, roues, freins, phares etc), en particulier en cas d'alerte (avec un arrêt demandé)
- affichage d'informations sur l'environnement extérieur : météo, distance d'une station-service (d'un point électricité etc), d'une ville, d'une sortie d'autoroute
- affichage d'informations sur la connectivité : accès au réseau ( réseau social, internet etc)
- fonctionnement en mode téléphonique : affichage de l'interlocuteur, d'un personne (police, milieu médical) en cas d'urgence et/ou d'accident ou de situation à risque

L'écran AMOLED et/ou un autre écran AMOLED peut aussi faire office de TV coté copilote, ou de fonctionnement en mode téléphonique : affichage de l'interlocuteur, d'un personne (police, milieu médical) en cas d'urgence et/ou d'accident ou de situation à risque.

L'écran AMOLED peut afficher plusieurs images comme dans une télévision
- image principale (vision centrale de l'arrière etc)
- image(s) incrustée(s) (vision latérale du véhicule etc).

L'écran AMOLED est notamment rectangulaire ou carré.

Côté face avant, au moins une frange périphérique dite bord technique de l'écran AMOLED (zone distincte de la zone active, d'affichage) peut être masquée par une couche de masquage dite interne, de préférence en émail, sur la face F3 ou F4 ou par un élément de masquage (film, couche opaque) sur la face avant. Et/ou la surface avant de l'élément de connexion (la partie de connectique) peut être masquée par une (même) couche de masquage dite interne, de préférence en émail, sur la face F3 ou F4 ou par un élément de masquage (film opaque) sur la surface avant.

La couche de masquage interne est éventuellement un aplat avec une ouverture laissant apparente la zone d'affichage et de largeur inférieure ou égale à la largeur de la couche de masquage externe.

La couche de masquage interne peut former non seulement :
- un masquage de la partie de connectique, opaque ou faiblement transparent,
- ainsi qu'un masquage des bords techniques de l'écran AMOLED, vus du côté intérieur du vitrage, notamment du pare-brise,
- et même, en dépassant du ou des bords techniques, de la jonction entre l'intercalaire de feuilletage et l'écran AMOLED, jonction qui peut comporter des irrégularités et failles, (et même de la jonction entre l'intercalaire de feuilletage et la partie de connectique).

L'élément de masquage peut faire partie d'un film de support et/ou protection tel que polytéréphtalate d'éthylène (PET) de l'écran AMOLED et de la partie de connectique.

Le film opaque peut être mis en adhésion avec l'ensemble de l'écran AMOLED et de la partie de connectique dès son prémontage en vue de son stockage, ou bien faire partie d'un film qui a été mis en adhésion avec cet ensemble prémonté, film dont on peut alors éventuellement éliminer une partie non désirée prédécoupée avant l'assemblage du pare-brise.

L'élément de masquage (film opaque etc) peut former non seulement :
- un masquage de la partie de connectique, opaque ou faiblement transparent,
- ainsi qu'un masquage des bords techniques de l'écran AMOLED, vus du côté intérieur du pare-brise,
- et même, en dépassant du ou des bords techniques, de la jonction entre l'intercalaire de feuilletage et l'écran AMOLED, jonction qui peut comporter des irrégularités et failles, (et même de la jonction entre l'intercalaire de feuilletage et la partie de connectique).

Le film opaque peut aussi être un prolongement opacifié du matériau polymère transparent recouvrant l'écran AMOLED, c'est-à-dire en être partie intégrante.

Le film opaque peut aussi alternativement ou cumulativement être un prolongement du matériau polymère recouvrant la partie de connectique, c'est-à-dire en être partie intégrante.

La couche de masquage interne ou l'élément de masquage (le film opaque) peuvent dépasser des bords techniques d'au moins 0,1mm et même d'au plus 5mm ou 2mm.

Les deux réalisations couche de masquage interne/élément de masquage ne s'excluent pas nécessairement l'une l'autre, et l'on peut imaginer un masquage du bord technique de l'écran AMOLED selon la première réalisation et un masquage de l'élément de connexion (la partie de connectique) selon la seconde, ou un double masquage du bord technique de l'écran AMOLED ou de l'élément de connexion selon les deux réalisations à la fois.

Le masquage a pour fonction de cacher des parties inutiles et disgracieuses du dispositif pour n'en laisser visible de l'intérieur que la partie utile ; tout procédé adapté à la nature du substrat selon la première ou seconde réalisation, peut être employé : impression telle que jet d'encre, sérigraphie, émail comme sur la face F2....

La couche de masquage interne peut se cantonner à masquer le ou les bords techniques et une partie (au moins celle visible) de l'élément de connexion électrique (de la partie de connectique), ou même dépasser éventuellement un peu d'au plus 1 à 2cm. La couche de masquage interne peut être dans la zone avec l'écran AMOLED de largeur inférieure ou égale à celle du masquage externe de sorte que le masquage externe est visible par transparence de part et d'autre de l'écran AMOLED.

Une couche de masquage interne et/ou externe peut être une couche d'émail foncé (noir), mais plus largement une couche de peinture ou encre opaque, ou une couche de polymère peinte (ex. PVB imprimé), par exemple en polyéthylène, en polyméthacrylate de méthyle (PMMA).

La couche de masquage externe en face F2 et celle interne en F3 ou F4 sont de préférence constituées du même matériau et même en émail. On préfère avoir une couche en émail au moins en face F2 et même en face F4.

Afin de limiter l'échauffement dans l'habitacle ou de limiter l'usage d'air conditionné, l'un des vitrages au moins (de préférence au moins le première vitrage) est de préférence teinté.

Le vitrage feuilleté peut comporter une couche réfléchissant ou absorbant le rayonnement solaire dite couche de contrôle solaire, de préférence de préférence en face F3 voire en face F2 du deuxième vitrage (de préférence clair). Cette couche électroconductrice est transparente car en partie dans le clair de vitre.

La couche de contrôle solaire peut aussi servir de couche chauffante avec une amenée de courant en périphérie.

En particulier, une zone de chauffage qui est connecté à au moins deux bus bar bars électroconducteurs destinés à la connexion à une source de tension de telle sorte qu'un trajet de courant pour un courant de chauffage est formée entre eux.

La largeur des busbars est de préférence de 2 mm à 30mm, de manière particulièrement préférée de 4 mm à 20mm et en particulier de 10 mm à 20mm.

Un busbar imprimé contient de préférence au moins un métal, un alliage métallique, un composé métallique et/ou de carbone, en particulier de préférence un métal noble et, en particulier, de l'argent. La pâte d'impression contient de préférence des particules métalliques, des particules métalliques et / ou de carbone et, en particulier des particules de métal noble tel que des particules d'argent. L'épaisseur d'un bus bar imprimé peut être de préférence de 5 µm à 40 µm, de manière particulièrement préférée de 8 µm à 20 µm et plus particulièrement de préférence de 8 µm à 12 µm.

En variante, cependant, un bus bar peut également être sous forme de bande d'une feuille électriquement conductrice. Le busbar contient alors, par exemple, au moins l'aluminium, le cuivre, le cuivre étamé, l'or, l'argent, le zinc, le tungstène et / ou de l'étain ou des alliages de ceux-ci. La bande a de préférence une épaisseur de 10 µm à 500 µm, de manière particulièrement préférée de 30 µm à 300 µm.

La couche de contrôle solaire et/ou chauffante peut comporter un empilement de couches minces comprenant au moins une couche fonctionnelle métallique comme d'argent (en F2 ou de préférence F3). La ou chaque couche fonctionnelle (argent) est disposée entre des couches diélectriques.

Les couches fonctionnelles contiennent de préférence au moins un métal, par exemple, l'argent, l'or, le cuivre, le nickel et le chrome ou, ou d'un alliage métallique. Les couches fonctionnelles en particulier contiennent de préférence au moins 90% en poids .- du métal, en particulier au moins 99,9% en poids .- du métal. Les couches fonctionnelles peuvent être faits de métal pour l'alliage métallique. Les couches fonctionnelles contiennent de façon particulièrement préférée d'argent ou d'un alliage contenant de l'argent. L'épaisseur d'une couche fonctionnelle (argent etc) est de préférence de 5 nm à 50 nm, plus préférentiellement de 8 nm à 25 nm. Une couche diélectrique contient au moins une couche individuelle faite d'un matériau diélectrique, par exemple, contenant un nitrure tel que le nitrure de silicium ou d'un oxyde tel que l'oxyde d'aluminium. La couche diélectrique peut cependant contenir aussi une pluralité de couches individuelles, par exemple, des couches individuelles d'un matériau diélectrique, des couches, des couches de lissage, qui correspond à des couches de blocage et / ou des couches antireflet. L'épaisseur d'une couche diélectrique est, par exemple, de 10 nm à 200 nm. Cette structure de couche est généralement obtenue par une succession d'opérations de dépôt qui sont effectuées par un procédé sous vide tel que la pulvérisation cathodique magnétique supporté sur le terrain.

La couche électroconductrice est une couche (monocouche ou multicouches donc empilement) de préférence d'une épaisseur totale inférieure ou égale à 2µm, de manière particulièrement préférée inférieur ou égale 1µm.

La couche électroconductrice peut avoir une résistance de 0,4 ohm / carré à 10 ohms / carré de feuille et même de 0,5 ohm / carré à 1 ohm / carré, avec typiquement des tensions à bord de 12 V à 48 V ou, dans le cas des véhicules électriques, avec des tensions à bord typiques jusqu'à 500 V.

On peut cumuler couche électroconductrice (à l'argent etc) en face F2 et/ou F3. La couche électroconductrice en face F3 est par exemple un empilement commercialisé par la Société Demanderesse sous le nom de Climacoat. Par exemple, elle peut être recouverte directement d'un masquage d'un ou de bords techniques de l'écran AMOLED (détaillé précédemment) et/ou de la partie de connectique.

Alternativement on peut utiliser une couche électroconductrice sur un support de préférence polymérique transparent flexible (polytéréphtalate d'éthylène dit PET etc) entre la face F2 et F3 (de préférence feuilleté par l'intercalaire plutôt que collé) pour être une couche de contrôle solaire éventuellement chauffante (avec au moins deux bus bars notamment comme précités).

Aussi, dans une réalisation, le vitrage (de préférence le pare-brise de véhicule notamment routier) comprend entre la face F2 et la face F4, notamment sur la face F3 ou sur la face F4, une couche électroconductrice de préférence transparente ou un ensemble de fils électroconducteurs (métalliques de préférence) de préférence transparents ou invisibles.

Et éventuellement en regard de la zone d'affichage, la couche électroconductrice est absente (retirée, par ablation laser ou tout autre moyen etc) notamment au moyen d'une ouverture de taille supérieure ou égale à la zone d'affichage ou l'ensemble des fils électroconducteurs sont absents (retirés) notamment au moyen d'une ouverture (suppression) de taille supérieure ou égale à la zone d'affichage.

Les fils électroconducteurs sont avantageusement minces notamment d'épaisseur inférieure ou égale à 0,1mm, de manière particulièrement préférée de 0,02 mm à 0,04mm, et en particulier de 0,024 mm à 0,029mm. Les fils métalliques contiennent de préférence de cuivre, de tungstène, d'or, d'argent ou aluminium ou d'alliages d'au moins deux de ces métaux. Les alliages peuvent aussi contenir le molybdène, le rhénium, l'osmium, l'iridium, le palladium ou le platine.

La couche électroconductrice peut couvrir au moins 50% et même au moins 70% ou 80% ou encore au moins 90% de la face principale du vitrage feuilleté.

La couche électroconductrice notamment avec ladite ouverture peut être sur la face F3 ou sur un film polymérique transparent flexible côte face F3 (au sein de l'intercalaire de feuilletage de préférence, plus proche de la face F3 que l'écran AMOLED) et même être est une couche de contrôle solaire et/ou chauffante qui couvre notamment au moins 50% et même au moins 70% ou 80% ou encore au moins 90% de la face F3. L'ouverture (l'absence de la couche électroconductrice ou des fils électroconducteurs) permet d'enlever la coloration due à la réflexion de la couche électroconductrice. Elle augmente aussi la transmission lumineuse TL dans cette zone.

De préférence le deuxième vitrage revêtu de la couche électroconductrice (avec éventuelle ouverture, de contrôle solaire et/ou même chauffante) est un verre clair ou extraclair, comme un Planiclear de la société Demanderesse (et le premier vitrage reste teinté).

La présente invention sera mieux comprise et d'autres détails et caractéristiques avantageuses de l'invention apparaitront à la lecture des exemples de vitrages feuilletés de véhicule selon l'invention illustrés par les figures suivantes :

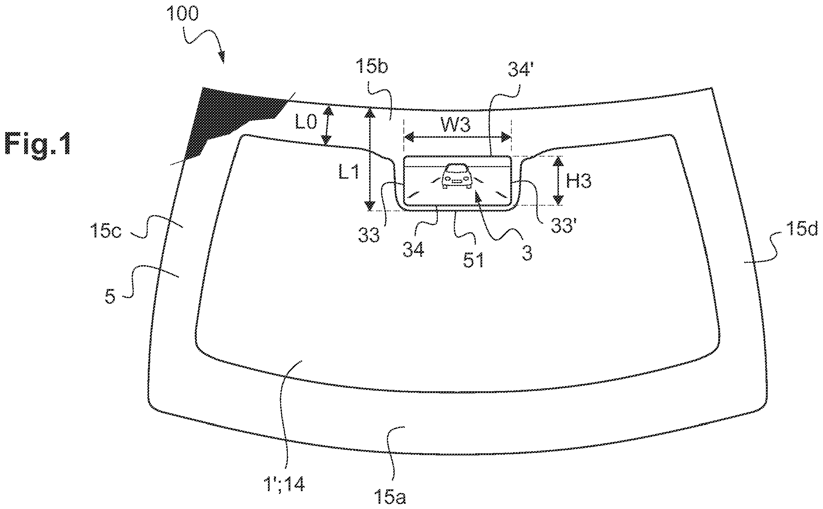

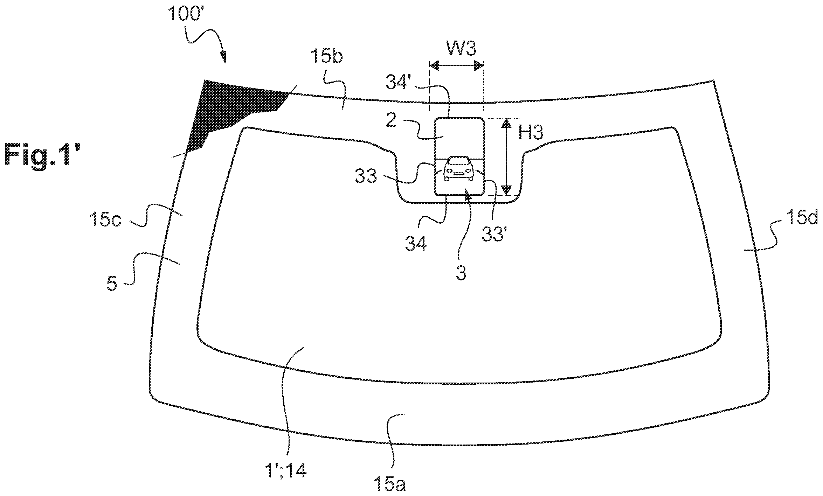

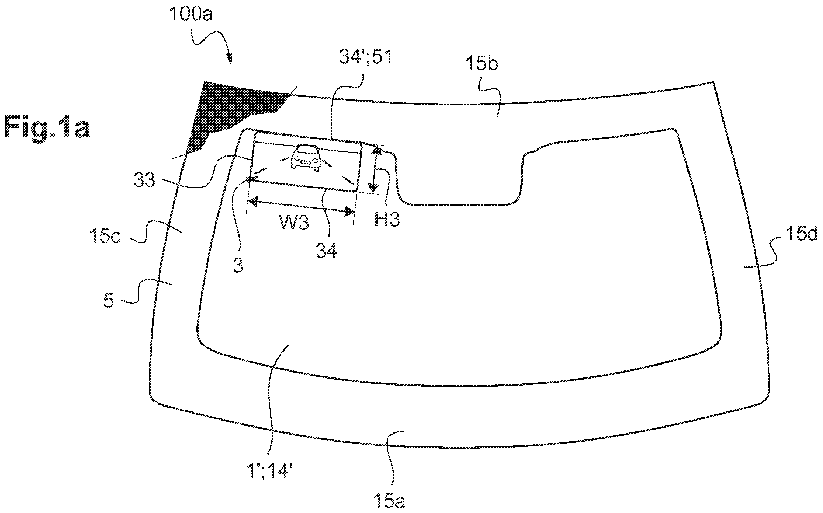

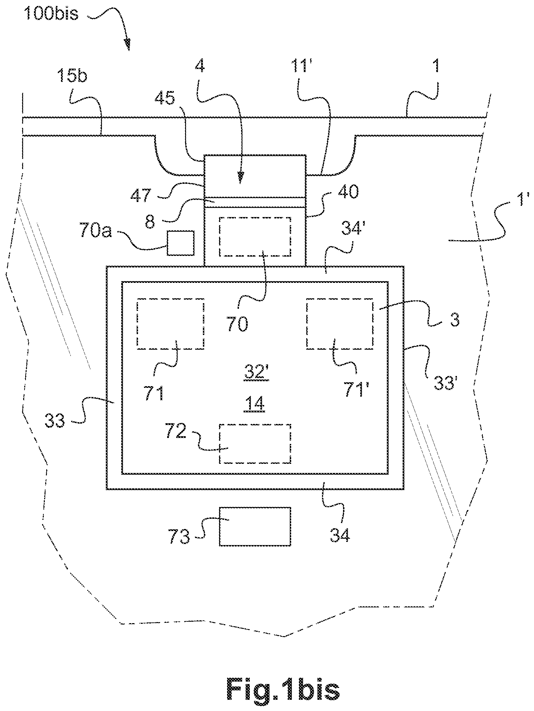

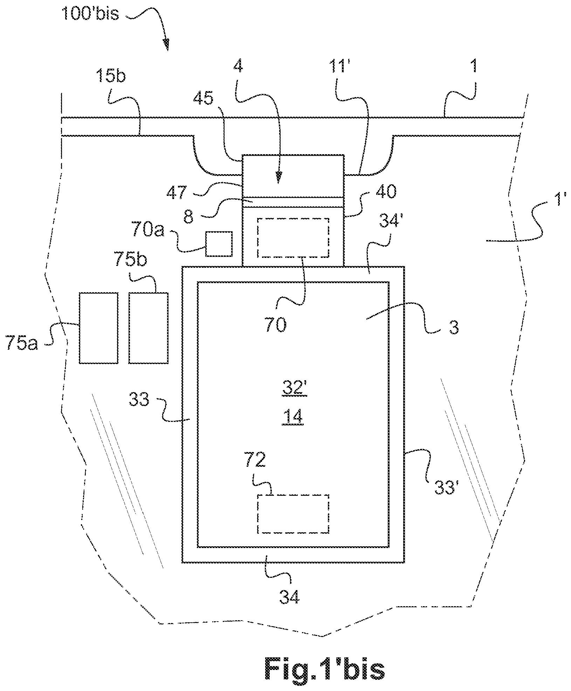

- les Figures 1, 1' ,1a, et 8 sont chacune une vue schématique de face d'un pare-brise avec écran AMOLED d'un véhicule automobile, vue côté intérieur
- les Figures 1bis, 1'bis, 2a, 2b.sont des vues schématiques de face et de détail d'un pare-brise avec écran AMOLED d'un véhicule automobile, vue côté intérieur
- les Figures 2, 3, 4, 5, 6, 7 sont des vues schématiques en coupe et partielle d'un pare-brise avec écran AMOLED d'un véhicule automobile, vue côté intérieur.

On précise que par un souci de clarté les différents éléments des objets représentés ne sont pas nécessairement reproduits à l'échelle. Par simplification, les vitrages ne sont pas représentés bombés ni les éléments flexibles dans le feuilletage courbés en s'adaptant à cette ou ces courbures (selon deux dimensions) de vitrage.

La Figure 1 est une représentation schématique partielle vue de l'intérieur d'un pare-brise avec écran AMOLED 100 d'un véhicule automobile.

Le pare-brise 100 comprend une zone centrale de clair de vue (partie centrale du vitrage intérieur 1' donc côte face F4 14) et une cadre périphérique de masquage externe 5, des bords longitudinaux bas 15a et haut 15b, latéraux gauche 15c et droit 15d, cadre masquant ici l'arrière de l'écran AMOLED 3 opaque ou faiblement transparent (pas assez transparent pour être dans le clair de vitre). La couche de masquage externe 5, en face F2, cache ainsi d'une vue de l'extérieur du véhicule l'écran AMOLED 3 (et son connecteur non représenté ici, de préférence dans le feuilleté). L'émail 5 a pour fonction première de cacher, vus de la face F1, le cordon de colle solidarisant le vitrage feuilleté final à la baie de carrosserie.

L'écran AMOLED est agencé en position centrale du bord longitudinal haut 15b de manière horizontale et est rectangulaire. Il est (tout ou partie) dans une zone dite élargie dont la largeur (dimension verticale) L1 de l'émail est plus grande que la largeur L0 adjacente (par exemple à gauche) servant pour le masquage classique et même côté copilote.

Par exemple, la dimension horizontale ou largeur W3 est d'au moins 120mm et même jusqu'à 250mm. La dimension verticale ou hauteur H3 est d'au moins 75mm.

L'écran AMOLED 3 est ici descendu au plus bas de la zone périphérique élargie. Son bord bas 34 est à proximité ou sur la frontière de l'aplat d'émail 51 (zone pleine) plutôt que sur la frontière de la zone éventuelle avec des motifs d'émail par exemple de largeur d'au plus 15mm. Son bord haut 34' peut être le plus haut possible (à la limite de la zone de vision dans l'habitacle), typiquement d'au moins 15mm et mieux d'au moins 70mm. Cela dépend de la conception du pare-brise (taille, inclinaison, clair de vue souhaité par le constructeur).

Les bords 53, 53' de la zone élargie d'émail 50 peut dépasser des bords latéraux 33 et 33' par exemple d'au plus 2 cm ou même 1 ou 0,5cm (limite de la zone pleine). A l'état off, l'écran AMOLED est sombre et même ne se distingue pas ou à peine du fond d'émail 5 (dépassant sur les côtés). On peut adapter la couleur d'émail en conséquence. De préférence l'émail est opaque et foncé.

L'écran AMOLED est ici dans une zone périphérique distincte de la zone centrale transparente dite zone A Z_{A} (la plus centrale et en deux parties, en quadrilatère) ou de la zone B réduite Z_{b} (en pointillés).

Un premier capteur formant capteur de pluie (ici non visible) est derrière l'écran AMOLED au sein du feuilletage dans la zone balayée par un essuie-glace.

Sur l'écran AMOLED 3 allumé, on peut voir la vision centrale de l'arrière du véhicule et de préférence les visions latérales du véhicule

L'écran AMOLED peut avoir la fonction de vision de l'arrière. Il peut aussi avoir d'autres fonctions comme : mode téléphone, mode télévision, affichage de données environnementales ou sur la route (cartes, GPS etc) ou sur le véhicule, affichage simultané sur une ou des zones d'écran (par exemple à la manière d'un écran de téléphone mobile).

En variante non montrée, l'écran AMOLED est sur le bord longitudinal haut côté conducteur. Il est plus haut mais peut être plus large que dans la zone centrale et dépasser dans la zone centrale (hors zone saillante d'émail).

En variante non montrée, l'écran AMOLED est sur le bord longitudinal bas côté conducteur dans la zone de vision. Il peut être plus large que dans la zone centrale En variante non montrée, l'écran AMOLED est sur le bord latéral bas côté conducteur et est agencé verticalement au plus bas dans la zone de vision

La Figure 1' est une représentation schématique partielle vue de l'intérieur d'un pare-brise 100' avec écran AMOLED d'un véhicule automobile.

Le pare-brise 100' diffère de celui en figure 1 en ce que l'écran AMOLED est agencé de manière verticale (H3 plus grand et W3 moins grande). Par exemple H3 est de 150mm à 300mm et W3 de 60m à 120mm.

En variante non montrée, on dispose dans cette zone centrale deux écrans AMOLED de part et d'autre de l'écran AMOLED :
- par exemple agencés également de manière verticale
- par exemple agencés de manière horizontale

La Figure 1a est une représentation schématique partielle vue de l'intérieur d'un pare-brise 100a avec écran AMOLED d'un véhicule automobile.

Le pare-brise 100a diffère de celui en figure 1 en ce que l'écran AMOLED est agencé dans une zone de transparente exigée par exemple avec le bord haut 34' à la limite de la zone pleine 51. Le premier capteur est derrière ou dans la zone centrale (élargie) adjacente.

La Figure 1bis est une vue schématique de face et de détail d'un pare-brise 100bis avec écran AMOLED d'un véhicule automobile, vue côté intérieur montrant différentes positions possibles de capteurs.

Par simplification la couche de masquage externe n'est pas représentée alors qu'elle couvre la zone de l'écran AMOLED (qui est en périphérie, opaque ou faiblement transparent). Les éléments en traits pleins sont vus par transparence au travers du vitrage intérieur1'.

Comme en figure 1, l'écran AMOLED 3 est agencé horizontalement dans la zone centrale du bord longitudinal haut 15b. Le pare-brise 100bis comprend une feuille de verre minéral extérieure 1 et une feuille de verre minéral intérieure 1' dont le bord supérieur 15b présente une encoche 11'.

L'écran AMOLED 3 est pris en sandwich entre la feuille de verre extérieure 1 et la feuille de verre intérieure 1'. Il présente une zone d'affichage 32' encadrée par un ou des bords techniques (ici quatre) en des étroites franges périphériques latérales 33 et 33', basse 34, haute 34' de largeur généralement de 0,5mm au moins. Il est alimenté par un élément de connexion électrique 4 de l'écran AMOLED 3 qui comporte :
- une partie flexible dite de connectique 40 entre la face F2 et la face F3 au sein de l'intercalaire de feuilletage avec une surface avant côté face F3 et une surface arrière côté face F2, d'épaisseur E4 inférieure à celle E2 de l'intercalaire de feuilletage, reliée à l'écran AMOLED et prolongeant l'écran AMOLED en direction du chant du deuxième vitrage,
- prolongée hors du chant du deuxième vitrage par une partie dite extérieure 45 flexible, courbée et fixée par collage en face F4 sans s'étendre jusqu'à la zone d'affichage 32' via une partie 47 terminée par son connecteur 8 dans une zone accessible au moment du montage/ démontage.

L'élément de connexion 4 est un circuit imprimé flexible (en anglais : « Flexible Printed Circuit » - FPC) apte à la mise en oeuvre de 2560 X 1600 pixels (écran AMOLED). Le FPC 4 pourrait aussi avantageusement être de même largeur que l'écran AMOLED 3, de manière à faciliter l'insertion des deux éléments dans l'intercalaire de feuilletage de préférence en polyvinylbutyral (PVB un peu en retrait par rapport aux bords de vitrage). Le verre intérieur 1' comporte une encoche 11'. Les dimensions de l'encoche 11' sont adaptées au FPC 4 :
- largeur de l'encoche 11' supérieure ou égale à celle du FPC 4 ;
- profondeur de l'encoche 11' supérieure ou égale à l'épaisseur du FPC 4 de préférence pour éviter que le FPC 4 soit visible de l'extérieur en cas de bord apparent.

En pratique la profondeur de l'encoche 11' est comprise entre 1,5mm et 2mm. La zone de l'encoche 11' est dépourvue sensiblement d'intercalaire de feuilletage.

Entre la face F2 et la face arrière de l'écran AMOLED 3 on peut placer des capteurs notamment à couche conductrice ou à fils électroconducteurs en particulier un détecteur de pluie 72 par exemple de type capacitif dans la zone de l'essuie-glace ou encore deux caméras (vision stéréoscopique) 71, 71' pour le visible ou les infrarouges sur la face F2, plus précisément chacune collée dans une ouverture (aire de détection) d'un émail en face F2.

Alternativement ou cumulativement on peut placer un ou des capteurs 70 entre la face F2 et la surface arrière 41 du FPC, notamment sur ou intégré dans le FPC 40 avant montage (et même avant enrobage). On prévoir une zone prédéterminée sur le FPC à cet effet par exemple en élargissant le FPC.

Alternativement ou cumulativement on peut placer un ou des capteurs 70a à côté du FPC 40, dans un même plan et de même épaisseur de préférence et même utiliser l'encoche 11' pour faire sortir un support souple flexible porteur du ou des capteurs 70a. Alternativement ou cumulativement, on peut placer un ou des capteurs 73, 75 à proximité et en périphérie de l'écran AMOLED 3 (ici côté gauche et en dessous), sur la face F2 ou sur la face F3 ou au sein du feuilletage en particulier tout élément relativement épais. Ce ou ces capteurs 73, 75 sont masqués par la couche de masquage externe (ou non s'ils sont invisibles, et alors dans le clair de vitre ou encore devant le fond de la couche de masquage externe avec éventuelle ouverture formant aire de détection). Ce peut être des caméras ou des photodiodes.

La Figure 1'bis.est une vue schématique de face et de détail d'un pare-brise 100'bis avec écran AMOLED d'un véhicule automobile, vue côté intérieur. Par simplification la couche de masquage externe n'est pas représentée alors qu'elle couvre la zone de l'écran AMOLED (en périphérie, opaque ou faiblement transparent). Les éléments en traits pleins sont vus par transparence au travers du vitrage intérieur1'.

Il diffère du pare-brise 100bis par son agencement à la verticale.

Entre la face F2 et la face arrière de l'écran AMOLED on peut placer des capteurs notamment à couche conductrice ou à fils électroconducteurs en particulier un détecteur de pluie 72 dans la zone de l'essuie-glace, par exemple de type capacitif.

Alternativement ou cumulativement on peut placer un ou des capteurs 70 entre la face F3 et la surface avant du FPC, notamment sur ou intégré dans le FPC avant montage (et même avant enrobage). On prévoir une zone prédéteminée sur le FPC à cet effet par exemple en élargissant le FPC. Ce capteur peut être ensuite masqué par un émail en face F3 ou F4 ou une surcouche opaque sur le FPC 40.

Alternativement ou cumulativement on peut placer un ou des capteurs 70a à côté du FPC, dans un même plan et de même épaisseur de préférence et même utiliser l'encoche 11' pour un support souple flexible porteur de capteurs 70a. Ce capteur peut être ensuite masqué par un émail en face F3 ou F4 ou une surcouche opaque sur le FPC 40.

Alternativement ou cumulativement, on peut placer un ou des capteurs 75a, 75b à proximité et en périphérie de l'écran AMOLED, sur la face F2 ou sur la face F3 ou au sein du feuilletage en particulier tout élément relativement épais.masqué par la couche de masquage externe (ou non s'ils sont invisibles). Ce peut être deux caméras (vision stéréoscopique) pour le visible ou les infrarouges sur la face F2 ou F3, plus précisément chacune collée dans une ouverture (aire de détection) d'un émail en face F2.

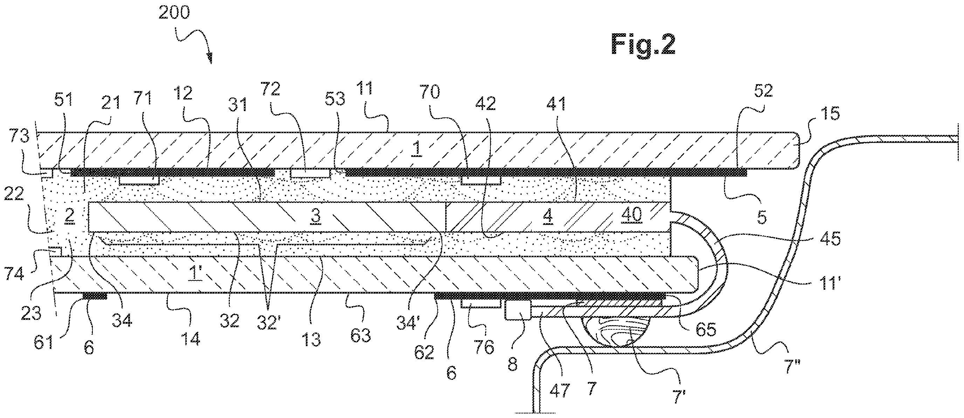

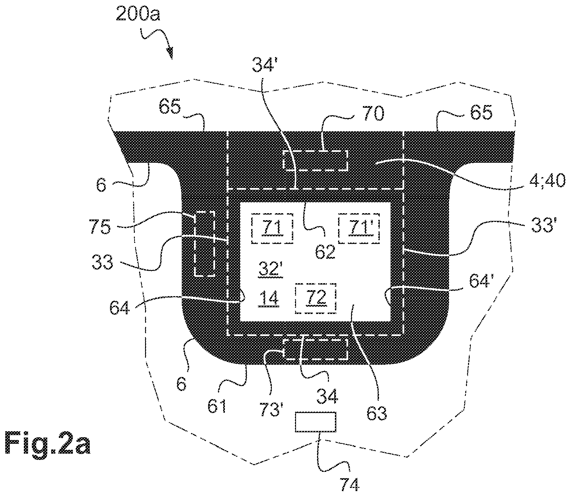

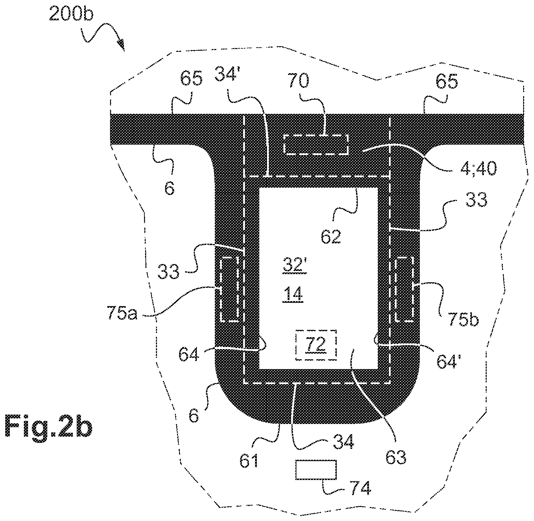

La Figure 2 est une vue schématique en coupe et partielle d'un pare-brise 200 avec écran AMOLED d'un véhicule automobile, vue côté intérieur.

Le pare-brise 200 comporte :
- un premier vitrage 1, avec une première face principale 11 dite F1, destinée à être coté extérieur du véhicule, et une deuxième face principale opposée 12 dite F2, de préférence d'épaisseur E1 d'au plus 2,5mm, en particulier une feuille de verre flotté silicosodocalcique de préférence teinté, de 2,1mm d'épaisseur de verre comme un verre TSA de la société Demanderesse
- un intercalaire de feuilletage en matière polymérique 2, côté face F2, d'épaisseur E2 de préférence d'au moins 0,76mm comme du polyvinylbutyral (PVB)
- un deuxième vitrage 1', avec une troisième face principale 13 dite F3 coté intercalaire de feuilletage 2 et une quatrième face principale opposée 14 dite F4, destinée à être coté intérieur du véhicule, de préférence d'épaisseur E'1 d'au plus 2,2mm, en particulier une feuille de verre flotté silicosodocalcique de 1,6mm d'épaisseur de verre, par exemple teinté comme un verre TSA de la société Demanderesse,
- entre la face F2 et la face F3 et au sein de l'intercalaire de feuilletage, un écran de visualisation à diode électroluminescente organique, comportant un ensemble de pixels, dit écran AMOLED 3, flexible, l'écran AMOLED comportant une zone d'affichage d'informations en dynamique 32', d'épaisseur E3 inférieure à E2 et de préférence subcentimétrique, écran AMOLED ayant une face principale avant 32 orientée vers la face F3 et une face arrière 31 orientée vers la face F2, l'écran AMOLED est agencé en périphérie,
- au sein de l'intercalaire de feuilletage un élément de connexion électrique 4 de l'écran AMOLED.

L'écran AMOLED 3 est donc pris en sandwich entre la feuille de verre extérieure 1 et la feuille de verre intérieure 1'. Il présente une zone d'affichage 32' encadrée par un ou des bords techniques i un, deux, trois ou quatre) en des étroites franges périphériques 34, 34' de largeur généralement de 0,5mm au moins (et inférieure à 1cm de préférence). L'écran AMOLED 3, flexible et directement prolongé vers un bord du vitrage, par l'élément de connexion 4 qui lui est relié et se prolonge hors feuilletage.

Il est alimenté par un élément de connexion électrique 4 de l'écran AMOLED 3 qui comporte :
- une partie flexible dite de connectique 40 entre la face F2 et la face F3 au sein de l'intercalaire de feuilletage avec une surface avant 42 côté face F3 et une surface arrière 41 côté face F2, d'épaisseur E4 inférieure à celle E2 de l'intercalaire de feuilletage reliée à l'écran AMOLED et prolongeant l'écran AMOLED en direction du chant du deuxième vitrage 1',
- prolongée hors du chant du deuxième vitrage via une partie dite extérieure 45 courbé et fixé par collage (en face F4 sans s'étendre jusqu'à la zone d'affichage 32' via une partie 47 terminée par son connecteur 8 dans une zone accessible au moment du montage/ démontage.

L'élément de connexion 4 est un circuit imprimé flexible (en anglais : « Flexible Printed Circuit » - FPC) apte à la mise en oeuvre de 2560 X 1600 pixels (écran AMOLED). Le FPC 4 pourrait avantageusement être de même largeur que l'écran AMOLED 3, de manière à faciliter l'insertion des deux éléments dans l'intercalaire de feuilletage (un peu en retrait par rapport aux bords de vitrage).

Le verre intérieur 1' comporte une encoche 11'. Les dimensions de l'encoche 11' sont adaptées au FPC 4 :
- largeur de l'encoche 11' supérieure ou égale à celle du FPC 4 ;
- profondeur de l'encoche 11' supérieure ou égale à l'épaisseur du FPC 4 de préférence pour éviter que le FPC 4 soit visible de l'extérieur en cas de bord apparent.

En pratique la profondeur de l'encoche 11' est comprise entre 1,5mm et 2mm. La zone de l'encoche 11' est dépourvue sensiblement d'intercalaire de feuilletage.

L'écran AMOLED 3 a par exemple une épaisseur E3. La partie de connectique 40 peut être moins épaisse. Elle est éventuellement recouverte ou enrobée de tout matériau pour en augmenter (si nécessaire) l'épaisseur E4 à une valeur sensiblement égale à E3. Si E4 est égale de 0,4mm, E3 est de 0,38 à 0,40mm. On utilise par exemple pour le feuilletage un feuillet central 22 de 0,38mm avec une réserve pour loger l'écran AMOLED et la partie de connectique et deux feuillets externes 22, 23 de 0,17mm ou 0,38mm. L'un des feuillets externes peut être plus épais par exemple 0,76mm.

On peut avoir plus que 3 feuillets (si insertion d'un film polymérique comme un PET etc) ou pour plus de protection mécanique.

Lorsque l'écran AMOLED est d'épaisseur d'au plus 0,15mm ou même d'au plus 0,2mm on peut éventuellement supprimer le feuillet central à l'assemblage.

Le premier vitrage (extérieur) 1 comporte une couche de masquage externe 5 en face F2, opaque, en émail noir de préférence,
- avec un bord 51 vers le centre du pare-brise
- et un bord 52 côté chant du vitrage 15 par exemple distant d'au plus 3 ou 1mm du chant 15.

Elle cache non seulement le cordon de colle 7' de la garniture 7" mais aussi l'écran AMOLED 3 (opaque ou faiblement transparent), la partie de connectique 40 et la partie hors vitrage 45 du FPC et la partie 47 et son connecteur 8.

La couche de masquage externe 5 est de préférence une zone pleine (un aplat) plutôt qu'un réseau de motifs. Au-delà du bord 51 elle peut être prolongée par un réseau de motifs (en même matière) par exemple en dégradé sur une largeur d'au plus 15mm et même 5mm et même plus grande si le chant 15 est le bord longitudinal inférieur.

Le deuxième vitrage 1' (intérieur) comporte en face F4 une couche de masquage interne 6 en face F4 (ou en variante F3), opaque, en émail noir de préférence, avec
- un bord 61 vers le centre du pare-brise
- un bord 65 côté encoche.

Cette couche de masquage interne 6 masque de l'intérieur toute la surface de la partie de connectique 40 en particulier celle qui est dans la zone de vision (hors zone avec garniture ou éventuel boitier). Elle peut être plus large que la partie de connectique. Cette couche de masquage interne masque également de l'intérieur les bords techniques 34, 34' de l'écran AMOLED. Elle peut dépasser par exemple d'au plus 10mm en regard de l'intercalaire de feuilletage sur le pourtour des bords techniques pour masquer des défauts de feuilletage.

Lorsque la couche de masquage interne 6 est ainsi sur le pourtour de l'écran AMOLED 3, on a donc formé une ouverture 63 (masquage ou post fabrication de la couche) laissant apparente la zone d'affichage 32'.

Elle peut aussi dépasser plus largement des bords techniques pour être de largeur (quasi égale) à celle de la couche de masquage externe 5 de part et d'autre de l'écran AMOLED (et/ou de la partie de connectique).

La couche de masquage interne 6 est de préférence une zone pleine (un aplat) plutôt qu'un réseau de motifs. Au-delà du bord 61 elle peut être prolongée par un réseau de motifs (en même matière) par exemple en dégradé sur une largeur d'au plus 15mm et même 5mm et même plus grande si le chant de l'encoche 11' est le bord longitudinal inférieur.

Les capteurs peuvent être placés de préférence dans la zone de balayage d'essuie-glace et/ou:
- sur la face F2, derrière l'écran AMOLED, par exemple capteur 71 qui est capacitif et par exemple un détecteur de pluie et capteur 72 qui est une caméra en regard d'une ouverture locale 53 de la couche de masquage 72
- et/ou sur la face F2, derrière la partie de connectique 40 , par exemple capteur 70 qui est qui est capacitif et
- et/ou sur la face F2 dans une zone transparente (de clair de vitre), capteur 73 par exemple une caméra, ou un capteur éventuellement transparent si nécessaire,
- et/ou sur la face F3 dans une zone transparente (de clair de vitre), capteur 74 par exemple une caméra, ou un capteur éventuellement transparent si nécessaire notamment à couche électroconductrice transparente ou fil(s) suffisamment fins.

Le capteur 71 ou 70 peut comporter une couche électroconductrice comme un émail conducteur sur l'émail en F2.

Des conducteurs d'alimentation des capteurs peuvent sortir par l'encoche 11' ou à proximité.

Un capteur 76 est sur la face F4 dans le champ de vision, sur l'émail 6 en F4, de préférence il est dans un boitier. Il sert par exemple d'élément d'antenne pour des signaux utilisés par l'écran AMOLED. Ce peut être un émail conducteur sur l'émail 6 . Ce peut être une couche transparente ou opaque sous l'émail 6 (pas de boitier de masquage nécessaire)

D'autres capteurs pour l'écran AMOLED peuvent être à l'avant du véhicule ou dans le tableau de bord.

Les capteurs notamment à couche ou à fils électroconducteurs peuvent être recouverts par un film polymérique (adhésivé) comme un polyimide, un PET ou encore par un vernis pour être isolés du PVB.

Un capteur peut influer sur un ou des paramètres d'affichage de l'écran AMOLED : luminance, contraste etc en fonction du jour ou de la nuit ou en fonction du climat (neige, pluie, brouillard). Un capteur peut servir pour une fonction GPS de l'écran AMOLED. Le détecteur de pluie peut être couplé à l'écran AMOLED notamment pour indiquer une vitesse limite réduite (en plus d'actionner le ou les essuies glaces)

Un capteur peut évaluer la distance à une obstacle ou voiture à l'avant et notamment alerter le conducteur sur une distance de sécurité trop courte via l'écran AMOLED La ou les caméras dans le visible (73 ou 74 de préférence) servent aussi à détecter du brouillard notamment pour indiquer une vitesse limite réduite via l'écran AMOLED.

La ou les caméras dans l'infrarouge (73 ou 74 de préférence) servent de nuit pour alerter via l'écran AMOLED par exemple de la présence d'animaux ou de vélos etc
Une photodiode sert par exemple à évaluer l'éclairement naturel pour régler la luminance de l'écran AMOLED.

Un capteur de température peut servir pour réguler les paramètres de fonctionnement de l'écran AMOLED.

La Figure 2a est une vue schématique de face et de détail d'un pare-brise avec écran AMOLED d'un véhicule automobile, vue côté intérieur.

Elle illustre l'étendue possible de la couche de masquage interne 6 de part et d'autre des bords techniques 33, 33', 34, 34' de l'écran AMOLED ici agencé horizontalement le long d'un bord longitudinal supérieur, en position centrale ou non.
- bords latéraux 64 et 64' dépassant de préférence d'au moins 3mm et
- bord bas 61 dépassant de préférence d'au moins 3mm.

Comme en figure 2, on retrouve :
- des capteurs 70, 71, 71', 72 (en pointillés) derrière la zone d'affichage 32' de l'écran AMOLED ou la partie de connectique 40 du PFC 4 ici de largeur égale à l'écran AMOLED
- un capteur 74 en face F3 (ou F3) dans une zone transparente au-delà du bord 61 (et de l'émail en face F2).

On peut également placer un des capteurs derrière la couche de masquage interne 6 (et devant la couche de masquage externe avec une ouverture locale si nécessaire) :
- capteur 73' côté bord bas 61, sur la face F3 ou F2
- capteur 75 coté bord latéral (ici gauche) 64, sur la face F3 ou F2.

On peut même prévoir un ou des capteurs sur les bords techniques de l'écran AMOLED, éventuellement suffisamment larges à cet effet.

La couche de masquage interne 6 est alternativement une bande de largeur donnée avec une ouverture pour l'écran AMOLED,
- bande le long du bord longitudinal supérieur ou inférieur, l'écran AMOLED agencé horizontalement étant côté conducteur et/ou copilote
- bande le long du bord latéral gauche ou droit, l'écran AMOLED agencé verticalement côté conducteur et/ou copilote.

La Figure 2b est une vue schématique de face et de détail d'un pare-brise 200b avec écran AMOLED d'un véhicule automobile, vue côté intérieur Il diffère du pare-brise 200a par son agencement à la verticale.

Comme en figure 2, on retrouve :
- des capteurs 72; 70 derrière la zone d'affichage 32' de l'écran AMOLED ou la partie de connectique 40 du FPC 4 ici de largeur égale à l'écran AMOLED
- un capteur 74 en face F3 (ou F3) dans une zone transparente au delà du bord 61 (et de l'émail en face F2).

On peut également placer un des capteurs derrière la couche de masquage interne 6 (et devant la couche de masquage externe avec une ouverture locale si nécessaire) :
- capteur 73' côté bord bas 61, sur la face F3 ou F2.

On peut même prévoir un ou des capteurs sur les bords techniques de l'écran AMOLED, éventuellement suffisamment larges à cet effet.

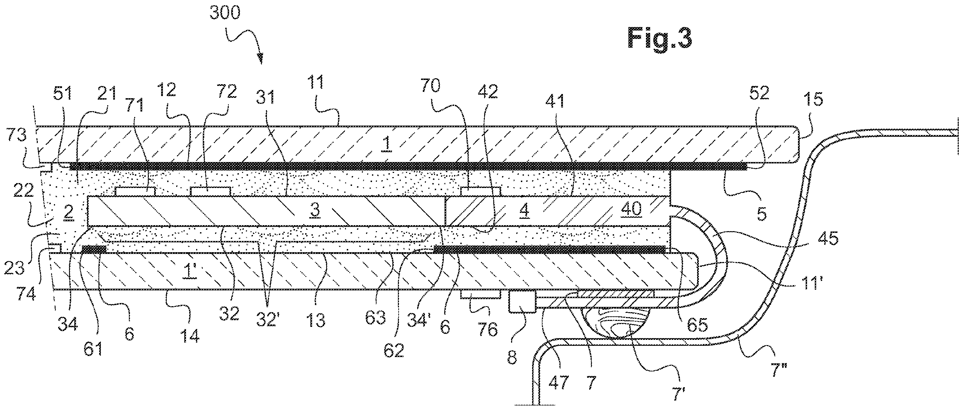

La Figure 3 est une vue schématique en coupe et partielle d'un pare-brise 300 avec écran AMOLED d'un véhicule automobile, vue côté intérieur.

Le pare-brise 300 diffère du pare-brise 200 d'abord en ce que la couche de masquage interne est en face F3 au lieu de face F4.

Le pare-brise 300 diffère du pare-brise 200 également en ce que les capteurs 71, 72,70 masqués en face F2 sont désormais sur la face arrière 31 ou la surface arrière 41, par exemple sur un film polymérique comme un PET. Le ou les capteurs peuvent comprendre en particulier une couche électroconductrice déposée sur le film polymérique avec éventuellement une couche barrière intercalée. Ils peuvent aussi être recouverts par un film polymérique (adhésivé) comme un polyimide, un PET ou encore par un vernis pour être isolés du PVB.

Le capteur 76 peut être invisible ou quasi invisible par exemple comprend une couche en ITO ou autre oxyde transparent conducteur.

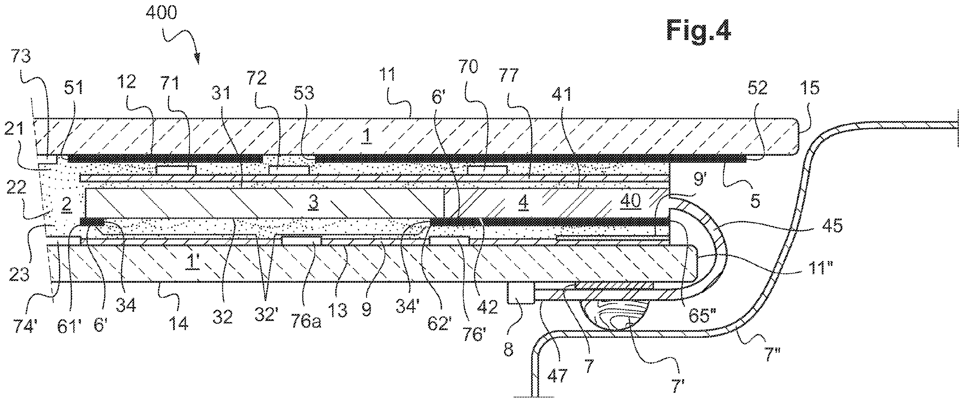

La Figure 4 est une vue schématique en coupe et partielle d'un pare-brise 400 avec écran AMOLED d'un véhicule automobile, vue côté intérieur.

Il diffère du pare-brise 200 en ce que la couche de masquage interne 6 est remplacé par d'un film opaque (opacifié) 6' de polytéréphtalate d'éthylène (PET) pouvant être mise en adhésion avec l'ensemble de l'écran AMOLED 3 et du FPC 4 dès son prémontage en vue de son stockage, ou bien faire partie d'un film qui a été mis en adhésion avec cet ensemble prémonté, film dont on peut alors éventuellement éliminer une partie non désirée prédécoupée avant l'assemblage du pare-brise.

Le film opaque 6' constitue :
- un masquage du FPC 40, opaque ou faiblement transparent, et de la jonction entre le PVB 22 (partie centrale) et l'écran AMOLED 3, qui peut comporter des irrégularités et failles,
- ainsi qu'un masquage 61', 62' des bords techniques 34 de l'écran AMOLED 3, vus du côté intérieur du pare-brise.

Le film opaque 6' peut aussi être un prolongement opacifié du matériau polymère transparent recouvrant l'écran AMOLED, c'est-à-dire en être partie intégrante.

Le film opaque 6' peut aussi alternativement ou cumulativement être un prolongement du matériau polymère recouvrant le FPC, c'est-à-dire en être partie intégrante.

Par ailleurs, la face F3 est munie d'une couche électroconductrice 9 et éventuellement d'une amenée de courant 9' pour celle-ci; cette couche peut consister en un empilement réfléchissant le rayonnement solaire, à l'argent ou autre, ou d'un revêtement /empilement chauffant muni à cet effet de son amenée de courant 9'. Elle peut être recouverte directement d'un masquage du bord technique de l'écran AMOLED mentionné précédemment.

Les capteurs 71, 72, 70 masqués en face F2 sont désormais sur un film polymérique 77 transparent ou non comme un PET feuilleté dans le PVB entre face F2 et surface arrière 31 et face arrière 41 et de préférence sortant côté encoche (et même replié pour être fixé en face F4. Alternativement ce film (PET) porteur de capteurs est dans le même plan que l'écran AMOLED, à proximité et même sort par l'encoche 11'.

Le capteur 74' sur la face F2 dans la zone de vision est une zone de la couche électroconductrice 9. Par exemple il forme un élément d'antenne pour l'extérieur (telépage etc). D'autres zones de la couche électroconductrice 9 peuvent former un capteur
- zone 76a en face de la zone d'affichage par exemple élément d'antenne pour l'intérieur
- zone 76' en face de la surface avant 42 masquée exemple élément d'antenne pour l'intérieur ou détecteur de buée.
76a et 76' sont des capteurs transparents.

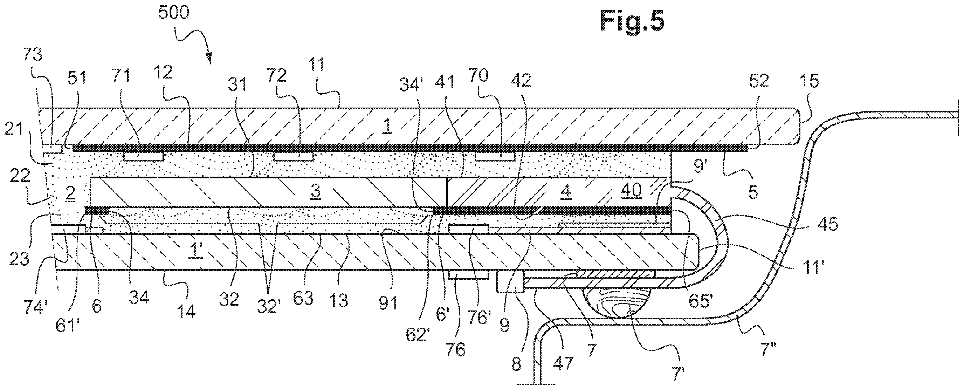

La Figure 5 est une vue schématique en coupe et partielle d'un pare-brise 500 avec écran AMOLED d'un véhicule automobile, vue côté intérieur.

Il diffère du pare-brise précédent 400 en ce que pour des raisons esthétiques la couche électroconductrice est absente au moins dans la zone 91 en regard de la zone d'affichage 32'. Pour des raisons esthétiques la couche électroconductrice est absente au moins dans la zone 91 en regard de la zone d'affichage 9. Cette ouverture 91 peut être plus grande (vers la gauche du dessin) afin d'enlever la coloration due à la réflexion de la couche. Elle peut augmenter aussi la TL dans une zone de clair de vitre (sans émail).

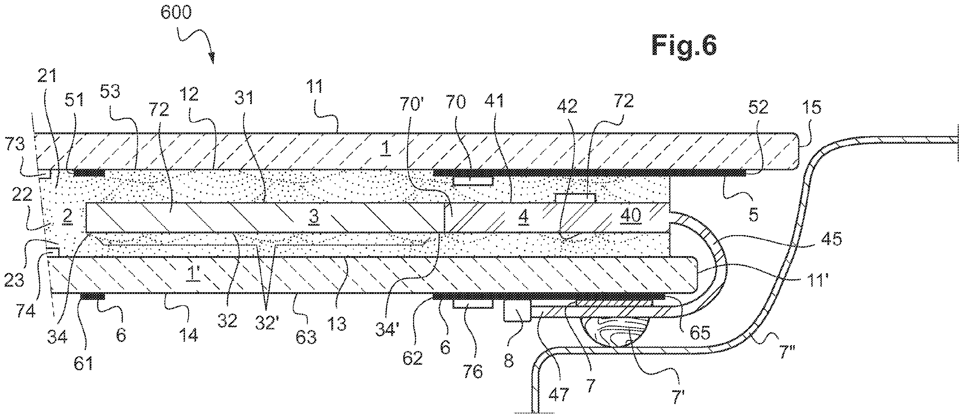

La Figure 6 est une vue schématique en coupe et partielle d'un pare-brise 600 avec écran AMOLED d'un véhicule automobile, vue côté intérieur.

Il diffère du pare-brise 200 en ce que l'écran AMOLED 3 est placé dans une zone de vision transparente dont sans couche de masquage externe 6 derrière.

Toutefois le masquage de l'extérieur des bords techniques 34, 34' (et même du PVB 22) par la couche d'émail externe 5,51 peut être accepté. Du coup la couche d'émail 5 peut avoir une ouverture 53 face à la zone d'écran AMOLED. Et le masquage de l'intérieur des bords techniques 34, 34' (et même du PVB 22) par la couche d'émail interne 6,61 peut être accepté. Du coup la couche d'émail 6 peut avoir une ouverture 63 face à la zone d'écran AMOLED.

Les capteurs sur la face F2 face à la zone d'écran AMOLED ont été supprimés ou sont suffisamment transparents. On peut rajouter un ou des capteurs 70, 72' derrière le FPC 4 encore masqué (difficilement assez transparent).
on peut prévoir des capteurs 71, 70' intégrés dans l'écran AMOLED ou le FPC 40.

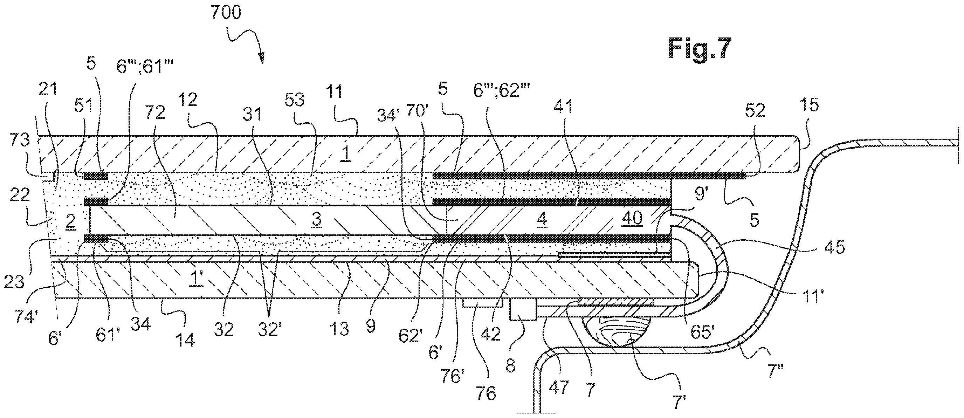

La Figure 7 est une vue schématique en coupe et partielle d'un pare-brise 700 avec écran AMOLED d'un véhicule automobile, vue côté intérieur.

Il diffère du pare-brise 600 par le remplacement de la couche de masquage interne 6 par un film opaque 6' (comme en figure 5) sur l'écran AMOLED et le FPC 40 côté avant. On peut aussi un film opaque 6" (comme en figure 5) sur l'écran AMOLED et le FPC 40 côté arrière en plus ou en remplacement de l'émail du bord 51.

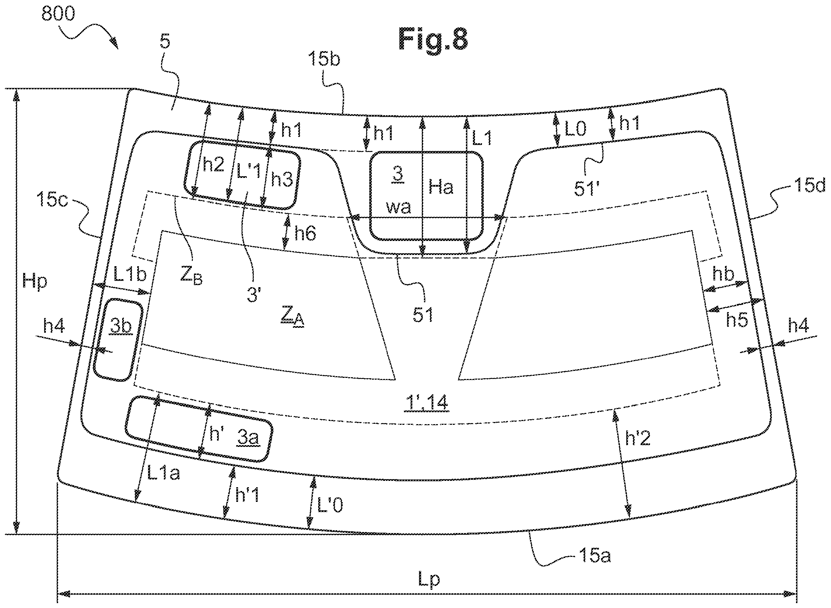

La figure 8 est une vue de face d'un pare-brise de véhicule routier qui illustre les zones périphériques possibles pour un écran AMOLED 3 opaque ou faiblement transparent ou même très transparent (sans masquage arrière) et montre la zone transparente centrale pour un écran AMOLED 3 tres transparent (hors de la portée des revendications).

Cette figure montre des distances définissant les limites de la zone de vision du conducteur (ou copilote) et de la zone A Z_{A} ou de la zone B réduite Z_{B}.

On définit des couples de distances suivantes :
- h1 distance entre le bord supérieur du pare-brise et la limite supérieure F de la zone périphérique de vision du conducteur ou du copilote dans le véhicule, de préférence d'au moins 15mm et h2 distance entre le bord supérieur et la limite supérieure F' de la zone centrale de transparence côté conducteur ou copilote, d'au moins 120mm, l'écran AMOLED 3' est entre lesdites limites F et F' ainsi que de préférence le(s) éventuel(s) autre(s) écran(s) AMOLED dans cette zone
- h'1 distance entre le bord inférieur du pare-brise et la limite inférieure F1 de la zone périphérique de vision du conducteur ou du copilote dans le véhicule de préférence d'au moins 40mm et h'2 distance entre le bord inférieur et la limite inférieure F'1 de la zone centrale transparence côté conducteur ou copilote d'au moins 120mm, l'écran AMOLED 3a est entre lesdites limites F1 et F'1 ainsi que de préférence le(s) éventuel(s) autre(s) écran(s) AMOLED dans cette zone
- h4 distance entre le bord latéral du pare-brise et la limite latérale F2 de la zone périphérique de vision du conducteur dans le véhicule de préférence d'au moins 15mm et h5 distance entre le bord latéral et la limite latérale F'2 de la zone centrale de transparence côté conducteur ou côté copilote d'au moins 80mm, l'écran AMOLED 3b est entre lesdites limites F2 et F'2 ainsi que de préférence le(s) éventuel(s) autre(s) écran(s) AMOLED dans cette zone
- h1 distance entre le bord supérieur du pare-brise et la limite supérieure F3 de la zone périphérique de vision du conducteur ou du copilote dans le véhicule, de préférence d'au moins 15mm et Hₐ distance entre le bord supérieur et la limite supérieure F'3 de la zone centrale de transparence dans la partie centrale, d'au moins 180mm, l'écran AMOLED est entre lesdites limites F3 et F'3 ainsi que de préférence le(s) éventuel(s) autre(s) écran(s) AMOLED dans cette zone.

Les limites d'émail L'1, L1, L1a, L1b peuvent être respectivement sensiblement égales à h2, Ha, h'2, h5 lorsque l'écran AMOLED doit être masqué.

En variante l'écran AMOLED n'est pas masqué par l'arrière (bande d'émail moins large) en particulier si très transparent.

De préférence la largeur de la zone centrale haute wa est d'au plus de 300mm.

Le pare-brise de véhicule routier (automobile) de forme rectangulaire est :
- de largeur (dimension horizontale) Lp de 1350 à1550mm,
- de hauteur (dimension verticale) Hp de 950 à 1050mm.

A titre d'exemple on a h1= 70mm;h2=195mm;h3= 125mm, Ha=270mm;wa=300mm; h6=75mm;h4=25mm, h5=125mm, h'=85mm, hb=100mm.

## Revendications

1. Vitrage feuilleté de véhicule (100 à 800) de préférence pare-brise de véhicule routier, comportant :
- un premier vitrage (1), avec une première face principale (11) dite F1, notamment destinée à être coté extérieur du véhicule, et une deuxième face principale opposée (12) dite F2, de préférence d'épaisseur E1 d'au plus 2,5mm
- un intercalaire de feuilletage en matière polymérique (2), côté face F2, d'épaisseur E2 de préférence d'au plus 2,2mm
- un deuxième vitrage (1'), avec une troisième face principale (13) dite F3 coté intercalaire de feuilletage (2) et une quatrième face principale opposée (14) dite F4, notamment destinée à être coté intérieur du véhicule, de préférence d'épaisseur E'1 d'au plus 2,2mm, l'un au moins des premier et deuxième vitrages étant en verre minéral,
- entre la face F2 et la face F3, un écran de visualisation à diode électroluminescente organique, comportant un ensemble de pixels, dit écran AMOLED (3), l'écran AMOLED comportant une zone d'affichage d'informations en dynamique (32'), est d'épaisseur E3 inférieure à E2 et de préférence subcentimétrique, écran AMOLED ayant une face principale avant (32) orientée vers la face F3 et une face arrière (31) orientée vers la face F2, l'écran AMOLED étant couvert par une épaisseur non nulle d'intercalaire de feuilletage et de préférence au sein de l'intercalaire de feuilletage, l'écran AMOLED est notamment agencé en périphérie,
- de préférence un élément de connexion électrique (4) de l'écran AMOLED, avec une partie flexible dite de connectique (40) entre la face F2 et la face F3 avec une surface avant (42) côté face F3 et une surface arrière (41) côté face F2, partie flexible de connectique couverte par une épaisseur non nulle d'intercalaire de feuilletage et de préférence au sein de l'intercalaire de feuilletage, d'épaisseur E4 inférieure à E2 et de préférence subcentimétrique, reliée à l'écran AMOLED et prolongeant l'écran AMOLED en direction du chant du deuxième vitrage, l'élément de connexion électrique, flexible, se prolongeant hors du chant du deuxième vitrage via une partie dite extérieure (45),
**caractérisé en ce que** l'écran AMOLED est flexible et **en ce que** le vitrage feuilleté comprend entre la face F2 et la face F3 un premier capteur (70, 70', 71, 72, 73, 74), d'épaisseur E6 inférieure à E2, couvert par une épaisseur non nulle d'intercalaire de feuilletage, éventuellement au sein de l'intercalaire de feuilletage, le premier capteur étant agencé selon la configuration (a) suivante :
(a) entre la face F2 et la face arrière et/ou la surface arrière
l'écran AMOLED est opaque ou transparent avec une transmission lumineuse TL inférieure à 10% et/ou la partie de connectique est opaque ou de transmission lumineuse TL inférieure à 10% et même à 5% et dans la configuration a) le premier capteur est masqué de l'extérieur par ladite couche de masquage externe, ou en regard d'une aire de détection correspondant à une ouverture (53) de la couche de masquage externe.

2. Vitrage feuilleté de véhicule selon la revendication 1 **caractérisé en ce que** l'écran AMOLED est masqué par une couche de masquage en périphérie dite externe (5) entre la face F2 et la face arrière de l'écran AMOLED et la partie de connectique est également éventuellement masquée par la couche de masquage externe ou **en ce que** l'écran AMOLED est dans le clair de vitre et la partie de connectique est de préférence masquée par une couche de masquage externe entre la face F2 et la surface arrière.

3. Vitrage feuilleté de véhicule selon l'une des revendications précédentes **caractérisé en ce que** l'écran AMOLED est transparent avec une transmission lumineuse TL inférieure à 5%, et/ou la partie de connectique est de transmission lumineuse TL inférieure à 5%

4. Vitrage feuilleté de véhicule selon l'une des revendications précédentes **caractérisé en ce que** l'élément de connexion électrique, notamment la partie de connectique, est masqué de l'extérieur par la couche de masquage dite externe (5) entre la surface arrière et la face F2, de préférence en face F2.

5. Vitrage feuilleté de véhicule selon l'une des revendications précédentes **caractérisé en ce que** le vitrage feuilleté est un pare-brise et le premier capteur est dans une zone de balayage d'un ou des essuie-glaces du pare-brise.

6. Vitrage feuilleté de véhicule selon l'une des revendications précédentes **caractérisé en ce que** le premier capteur ou un autre capteur est un capteur de couplage, couplé fonctionnellement à l'écran AMOLED commandant au moins un paramètre d'affichage et/ou des données d'image et éventuellement en face F4 à l'exception du premier capteur.

7. Vitrage feuilleté de véhicule selon l'une des revendications précédentes **caractérisé en ce que** le ou les premiers capteurs sont choisis parmi l'au moins des capteurs suivants: caméra dans le visible, caméra dans l'infrarouge, un photodétecteur, un détecteur de pluie, un élément d'antenne pour ondes venant de l'extérieur ou de l'intérieur.

8. Vitrage feuilleté de véhicule selon l'une des revendications précédentes **caractérisé en ce que** le premier capteur est sur la face F2, sur la couche de masquage externe en face F2 ou dans une aire de détection.

9. Vitrage feuilleté de véhicule selon l'une des revendications précédentes **caractérisé en ce que** le premier capteur comporte un ou des fils électroconducteurs ou encore comporte un élément électroconducteur sur un film flexible polymérique.

10. Vitrage feuilleté de véhicule selon l'une des revendications précédentes **caractérisé en ce que** le premier capteur comporte une couche conductrice à l'avant ou l'arrière de l'écran AMOLED ou de la partie de connectique, ou encore une couche conductrice sur la face F2 ou face F3.

11. Vitrage feuilleté de véhicule selon l'une des revendications précédentes **caractérisé en ce que** le deuxième vitrage porte en face F3 ou F4 une couche de masquage dite interne (6) apte à masquer de l'intérieur :
- le ou les bords techniques de l'écran AMOLED et d'éventuel(s) autre(s) écran(s) AMOLED adjacent(s) ou sur des bords longitudinaux distincts et à masquer même une zone de jonction entre l'intercalaire de feuilletage et l'écran AM-OLED ou d'éventuel(s) autre(s) écran(s) AMOLED
- et/ou le ou les éléments de connexion électriques de l'écran AMOLED et d'éventuel(s) autre(s) écran(s) AMOLED adjacent(s) ou sur des bords longitudinaux distincts.

12. Vitrage feuilleté de véhicule selon l'une des revendications précédentes **caractérisé en ce que** le ou les bords techniques de l'écran AMOLED et d'éventuel(s) autre(s) écran(s) AMOLED sont masqués par un élément de masquage dit intérieur sur l'écran AMOLED notamment sous une couche diélectrique de protection ou étant une zone opaque d'une couche de protection diélectrique, notamment une résine,
- et/ou le ou les éléments de connexion électriques sont masqués par ledit élément de masquage intérieur ou un autre adjacent notamment sous une couche diélectrique de protection ou étant une zone opaque d'une couche de protection diélectrique, notamment une résine.

13. Vitrage feuilleté de véhicule selon l'une des revendications précédentes **caractérisé en ce que** l'élément de connexion électrique, de préférence d'épaisseur submicronique E4 sensiblement égale à E2 et d'épaisseur E'4 inférieure à E4 au-delà du chant du deuxième vitrage, est courbé et est contre ou fixé par collage en face F4 sans s'étendre jusqu'à la zone d'affichage et de préférence la largeur de l'élément de connexion (4) est essentiellement égale à celle de l'écran AMOLED jusqu'au bord du vitrage feuilleté.

14. Vitrage feuilleté de véhicule selon l'une des revendications précédentes **caractérisé en ce que** l'écran AMOLED (3) et/ou la partie de connectique a une épaisseur au plus égale à 0,8mm, de préférence au plus égale à 0,7mm, et de manière particulièrement préférée au plus égale à 0,6mm.

15. Vitrage feuilleté de véhicule selon l'une des revendications précédentes **caractérisé en ce qu'**il comporte sur la face F3 une couche conductrice formant élément d'antenne et éventuellement couche de contrôle solaire et/ou chauffante, qui est transparente et en regard de la zone d'affichage ou qui est éventuellement transparente et absente de la zone en regard de la face avant.

16. Vitrage feuilleté de véhicule selon l'une des revendications précédentes **caractérisé en ce qu'**il comprend entre la face F2 et la face F4, notamment sur la face F3 ou sur la face F4, une couche électroconductrice de préférence transparente ou un ensemble de fils électroconducteurs de préférence transparents ou invisibles et **en ce qu'**éventuellement en regard de la zone d'affichage (32') la couche électroconductrice, ou l'ensemble des fils électroconducteurs est absente notamment au moyen d'une ouverture de taille supérieure ou égale à la zone d'affichage et même à l'écran AMOLED.

17. Vitrage feuilleté de véhicule selon la revendication précédente **caractérisé en ce que** la couche électroconductrice, notamment avec ladite ouverture, est sur la face F3, est ou sur un film polymérique transparent flexible côte face F3, et est une couche de contrôle solaire et/ou chauffante et couvre au moins 50% et même au moins 70% de la face F3.

18. Vitrage feuilleté de véhicule selon l'une des revendications précédentes **caractérisé en ce que** l'écran AMOLED, couvre au plus toute la zone périphérique visible par le conducteur dans le pare-brise de véhicule routier jusqu'au bord de la zone centrale de vision transparente notamment une zone dite zone B réduite définie par une norme.

19. Vitrage feuilleté de véhicule selon l'une des revendications précédentes **caractérisé en ce qu'**il forme un pare-brise de véhicule routier, et on définit la ou les distances suivantes :
- h2 distance entre le bord supérieur du pare-brise et la limite supérieure de la zone centrale de transparence côté conducteur ou copilote, de préférence d'au moins 120mm, l'écran AMOLED étant au-dessus de ladite limite supérieure et même le(s) éventuel(s) autre(s) écran(s) AMOLED
- et/ou h'2 distance entre le bord inférieur du pare-brise et la limite inférieure de la zone centrale transparence côté conducteur ou copilote de préférence d'au moins 120mm, et l'écran AMOLED étant en-dessous de ladite limite inférieure ainsi que de préférence le(s) éventuel(s) autre(s) écran(s) AMOLED,
- et/ou h5 distance entre le bord latéral du pare-brise et la limite latérale de la zone centrale de transparence côté conducteur ou côté copilote de préférence d'au moins 80mm, et l'écran AMOLED étant entre le bord latéral et ladite limite latérale ainsi que de préférence le(s) éventuel(s) autre(s) écran(s) AMOLED,
- et/ ou Hₐ distance entre le bord supérieur du pare-brise et la limite supérieure de la zone centrale de transparence dans la partie centrale, de préférence d'au moins 180mm, et l'écran AMOLED étant entre le bord et la limite supérieure ainsi que de préférence le(s) éventuel(s) autre(s) écran(s) AMOLED,

20. Vitrage feuilleté de véhicule selon l'une des revendications précédentes **caractérisé en ce qu'**il forme un pare-brise de véhicule routier, et on définit des couples de distances suivantes :
- h1 distance entre le bord supérieur du pare-brise et la limite supérieure F de la zone périphérique de vision du conducteur ou du copilote dans le véhicule, de préférence d'au moins 15mm et h2 distance entre le bord supérieur et la limite supérieure F' de la zone centrale de transparence côté conducteur ou copilote, d'au moins 120mm, l'écran AMOLED est entre lesdites limites F et F' ainsi que de préférence le(s) éventuel(s) autre(s) écran(s) AMOLED
- et/ou h'1 distance entre le bord inférieur du pare-brise et la limite inférieure F1 de la zone périphérique de vision du conducteur ou du copilote dans le véhicule de préférence d'au moins 40mm et h'2 distance entre le bord inférieur et la limite inférieure F'1 de la zone centrale transparence côté conducteur ou copilote d'au moins 120mm, l'écran AMOLED est entre lesdites limites F1 et F'1 ainsi que de préférence le(s) éventuel(s) autre(s) écran(s) AMOLED
- et/ou h4 distance entre le bord latéral du pare-brise et la limite latérale F2 de la zone périphérique de vision du conducteur dans le véhicule de préférence d'au moins 15mm et h5 distance entre le bord latéral et la limite latérale F'2 de la zone centrale de transparence côté conducteur ou côté copilote d'au moins 80mm, l'écran AMOLED est entre lesdites limites F2 et F'2 ainsi que de préférence le(s) éventuel(s) autre(s) écran(s) AMOLED
- h1 distance entre le bord supérieur du pare-brise et la limite supérieure F3 de la zone périphérique de vision du conducteur ou du copilote dans le véhicule, de préférence d'au moins 15mm et Hₐ distance entre le bord supérieur et la limite supérieure F'3 de la zone centrale de transparence dans la partie centrale, d'au moins 180mm, l'écran AMOLED est entre lesdites limites F3 et F'3 ainsi que de préférence le(s) éventuel(s) autre(s) écran(s) AMOLED.

21. Vitrage feuilleté de véhicule selon l'une des revendications précédentes **caractérisé en ce qu'**il forme un pare-brise de véhicule routier tel qu'une automobile, un camion, avec les premier et deuxième vitrage bombés et même un intercalaire de feuilletage en PVB.

## Patentansprüche

1. Verbundverglasung für ein Fahrzeug (100 bis 800), vorzugsweise eine Windschutzscheibe eines Straßenfahrzeugs, umfassend:
- eine erste Verglasung (1) mit einer ersten Hauptfläche (11) mit der Bezeichnung F1, die insbesondere für eine Außenseite des Fahrzeugs vorgesehen ist, und einer zweiten gegenüberliegenden Hauptfläche (12) mit der Bezeichnung F2, mit einer Dicke E1 von vorzugsweise höchstens 2,5 mm
- eine Verbundzwischenlage aus polymerem Material (2), seitens Fläche F2, mit einer Dicke E2 von vorzugsweise höchstens 2,2 mm
- eine zweite Verglasung (1'), mit einer dritten Hauptfläche (13) mit der Bezeichnung F3 seitens der Verbundzwischenlage (2) und einer vierten gegenüberliegenden Hauptfläche (14) mit der Bezeichnung F4, die insbesondere für eine Innenseite des Fahrzeugs vorgesehen ist, mit einer Dicke E'1 von vorzugsweise höchstens 2,2 mm, wobei mindestens eine der ersten und der zweiten Verglasung aus Mineralglas besteht,
- zwischen der Fläche F2 und der Fläche F3, ein Displaygerät mit organischer Leuchtdiode, das eine Anordnung von Pixeln umfasst, mit der Bezeichnung AMOLED-Display (3), wobei das AMOLED-Display eine dynamische Informationsanzeigezone (32') umfasst, eine Dicke E3 aufweist, die kleiner als E2 und vorzugsweise subzentimetrisch ist, wobei das AMOLED-Display eine vordere Hauptfläche (32), die der Fläche F3 zugewandt ist, und eine hintere Fläche (31), die der Fläche F2 zugewandt ist, aufweist, wobei das AMOLED-Display durch eine Verbundzwischenlage mit einer Dicke ungleich null bedeckt ist und sich vorzugsweise innerhalb der Verbundzwischenlage befindet, wobei das AMOLED-Display insbesondere an einem Umfang angeordnet ist,
- vorzugsweise ein elektrisches Verbindungselement (4) des AMOLED-Displays, mit einem flexiblen Teil mit der Bezeichnung Verbindungsteil (40) zwischen der Fläche F2 und der Fläche F3 mit einer vorderen Oberfläche (42) seitens Fläche F3 und einer hinteren Oberfläche (41) seitens Fläche F2, wobei der flexible Verbindungsteil durch eine Verbundzwischenlage mit einer Dicke ungleich null bedeckt ist und sich vorzugsweise innerhalb der Verbundzwischenlage befindet, mit einer Dicke E4, die kleiner als E2 und vorzugsweise subzentimetrisch ist, der mit dem AMOLED-Display verknüpft ist und das AMOLED-Display in Richtung der Kante der zweiten Verglasung verlängert, wobei das flexible elektrische Verbindungselement über einen äußeren Teil mit der Bezeichnung Außenteil (45) über die Kante der zweiten Verglasung hinaus verlängert ist,
**dadurch gekennzeichnet, dass** das AMOLED-Display flexibel ist und dass die Verbundverglasung zwischen der Fläche F2 und der Fläche F3 einen ersten Sensor (70, 70', 71, 72, 73, 74) mit einer Dicke E6, die kleiner als E2 ist, vorweist, der durch eine Verbundzwischenlage mit einer Dicke ungleich null bedeckt ist, eventuell innerhalb der Verbundzwischenlage, wobei der erste Sensor gemäß der folgenden Konfiguration (a) angeordnet ist:
(a) zwischen der Fläche F2 und der hinteren Fläche und/oder der hinteren Oberfläche
wobei das AMOLED-Display optisch dicht oder transparent mit einer Lichtdurchlässigkeit TL von weniger als 10 % ist, und/oder der Verbindungsteil optisch dicht ist oder eine Lichtdurchlässigkeit TL von weniger als 10 % und sogar 5 % besitzt, und in der Konfiguration a) der erste Sensor von außen oder gegenüber einem Erfassungsbereich, der einer Öffnung (53) der äußeren Maskierungsschicht entspricht, durch die äußere Maskierungsschicht maskiert ist.

2. Verbundverglasung für das Fahrzeug nach Anspruch 1,
**dadurch gekennzeichnet, dass** das AMOLED-Display durch eine Umfangsmaskierungsschicht mit der Bezeichnung äußere Umfangsmaskierungsschicht (5) zwischen der Fläche F2 und der hinteren Fläche des AMOLED-Displays maskiert ist und der Verbindungsteil eventuell ebenfalls durch die äußere Maskierungsschicht maskiert ist oder, dass das AMOLED-Display sich in klarem Glas befindet und der Verbindungsteil vorzugsweise durch eine äußere Maskierungsschicht zwischen der Fläche F2 und der hinteren Oberfläche maskiert ist.

3. Verbundverglasung für das Fahrzeug nach einem der vorstehenden Ansprüche, **dadurch gekennzeichnet, dass** das AMOLED-Display transparent mit einer Lichtdurchlässigkeit TL von weniger als 5 % ist, und/oder der Verbindungsteil eine Lichtdurchlässigkeit TL von weniger als 5 % besitzt.

4. Verbundverglasung für das Fahrzeug nach einem der vorstehenden Ansprüche, **dadurch gekennzeichnet, dass** das elektrische Verbindungselement, insbesondere der Verbindungsteil, von außen durch die Maskierungsschicht mit der Bezeichnung äußere Maskierungsschicht (5) zwischen der hinteren Oberfläche und der Fläche F2, vorzugsweise auf der Fläche F2, maskiert ist.

5. Verbundverglasung für das Fahrzeug nach einem der vorstehenden Ansprüche, **dadurch gekennzeichnet, dass** die Verbundverglasung eine Windschutzscheibe ist und der erste Sensor sich in einer Wischzone eines oder mehrerer Scheibenwischer der Windschutzscheibe befindet.

6. Verbundverglasung für das Fahrzeug nach einem der vorstehenden Ansprüche, **dadurch gekennzeichnet, dass** der erste Sensor oder ein anderer Sensor ein Kopplungssensor ist, der funktional mit dem AMOLED-Display gekoppelt ist, der mindestens einen Anzeigeparameter und/oder Bilddaten steuert und eventuell, mit Ausnahme des ersten Sensors, auf der Fläche F4 ist.

7. Verbundverglasung für das Fahrzeug nach einem der vorstehenden Ansprüche, **dadurch gekennzeichnet, dass** der oder die erste(n) Sensor(en) aus mindestens einem der folgenden Sensoren ausgewählt ist/sind: Kamera in einem sichtbaren Bereich, Kamera in einem Infrarotbereich, Fotodetektor, Regenmelder, Antennenelement für von außen oder innen kommende Wellen.

8. Verbundverglasung für das Fahrzeug nach einem der vorstehenden Ansprüche, **dadurch gekennzeichnet, dass** sich der erste Sensor auf der Fläche F2, auf der äußeren Maskierungsschicht auf der Fläche F2 oder in einem Erfassungsbereich befindet.

9. Verbundverglasung für das Fahrzeug nach einem der vorstehenden Ansprüche, **dadurch gekennzeichnet, dass** der erste Sensor einen oder mehrere elektrisch leitende Drähte umfasst oder auch ein elektrisch leitendes Element auf einer flexiblen Polymerfolie umfasst.

10. Verbundverglasung für das Fahrzeug nach einem der vorstehenden Ansprüche, **dadurch gekennzeichnet, dass** der erste Sensor eine leitende Schicht vor oder hinter dem AMOLED-Display oder dem Verbindungsteil, oder auch eine leitende Schicht auf der Fläche F2 oder der Fläche F3, umfasst.

11. Verbundverglasung für das Fahrzeug nach einem der vorstehenden Ansprüche, **dadurch gekennzeichnet, dass** die zweite Verglasung auf der Fläche F3 oder F4 eine Maskierungsschicht mit der Bezeichnung innere Maskierungsschicht (6) trägt, die dazu geeignet ist, Folgendes von innen zu maskieren:
- den oder die technischen Rand/Ränder des AMOLED-Displays und von (einem) eventuellen anderen AMOLED-Display(s), angrenzend oder an separaten Längsrändern, und um sogar eine Übergangszone zwischen der Verbundzwischenlage und dem AMOLED-Display oder (einem) eventuellen anderen AMOLED-Display(s) zu maskieren
- und/oder das oder die elektrische(n) Verbindungselement(e) des AMOLED-Displays und von (einem) eventuellen anderen AMOLED-Display(s), angrenzend oder an separaten Längsrändern.

12. Verbundverglasung für das Fahrzeug nach einem der vorstehenden Ansprüche, **dadurch gekennzeichnet, dass** der oder die technische(n) Rand/Ränder des AMOLED-Displays und von (einem) eventuellen anderen AMOLED-Display(s) durch ein Maskierungselement mit der Bezeichnung inneres Maskierungselement auf dem AMOLED-Display, insbesondere unter einer dielektrischen Schutzschicht oder als eine optisch dichte Zone einer dielektrischen Schutzschicht, insbesondere eines Harzes, maskiert sind,
- und/oder das oder die elektrische(n) Verbindungselement(e) durch das innere Maskierungselement oder ein anderes angrenzendes Element insbesondere unter einer dielektrischen Schutzschicht maskiert sind oder als eine optisch dichte Zone einer dielektrischen Schutzschicht, insbesondere eines Harzes, maskiert sind.

13. Verbundverglasung für das Fahrzeug nach einem der vorstehenden Ansprüche, **dadurch gekennzeichnet, dass** das elektrische Verbindungselement, vorzugsweise mit einer submikronischen Dicke E4, die im Wesentlichen gleich E2 ist, und einer Dicke E'4, die kleiner als E4 ist, über die Kante der zweiten Verglasung hinaus, gebogen ist und an der Fläche F4 anliegt oder durch Kleben befestigt ist, ohne sich bis zu der Anzeigezone zu erstrecken, und vorzugsweise die Breite des Verbindungselements (4) im Wesentlichen gleich der des AMOLED-Displays bis zu dem Rand der Verbundverglasung ist.

14. Verbundverglasung für das Fahrzeug nach einem der vorstehenden Ansprüche, **dadurch gekennzeichnet, dass** das AMOLED-Display (3) und/oder der Verbindungsteil eine Dicke von höchstens gleich 0,8 mm, vorzugsweise von höchstens gleich 0,7 mm und besonders bevorzugt von höchstens gleich 0,6 mm aufweist.

15. Verbundverglasung für das Fahrzeug nach einem der vorstehenden Ansprüche, **dadurch gekennzeichnet, dass** sie auf der Fläche F3 eine leitende Schicht umfasst, die ein Antennenelement und eventuell eine Sonnenschutz- und/oder Heizschicht bildet, die transparent ist und der Anzeigezone gegenüberliegt oder die eventuell transparent ist und in der Zone gegenüber der vorderen Fläche fehlt.

16. Verbundverglasung für das Fahrzeug nach einem der vorstehenden Ansprüche, **dadurch gekennzeichnet, dass** sie zwischen der Fläche F2 und der Fläche F4, insbesondere auf der Fläche F3 oder auf der Fläche F4, eine vorzugsweise transparente elektrisch leitende Schicht oder eine Anordnung von vorzugsweise transparenten oder unsichtbaren elektrisch leitenden Drähten vorweist, **und dass** eventuell gegenüber der Anzeigezone (32') die elektrisch leitende Schicht oder die Anordnung der elektrisch leitenden Drähte fehlt, insbesondere mittels einer Öffnung, deren Größe größer als oder gleich der Anzeigezone und sogar dem AMOLED-Display ist.

17. Verbundverglasung für das Fahrzeug nach dem vorstehenden Anspruch, **dadurch gekennzeichnet, dass** sich die elektrisch leitende Schicht, insbesondere mit der Öffnung, auf der Fläche F3 befindet, oder sich über einer flexiblen transparenten Polymerfolie seitens Fläche F3 befindet oder diese ist, und eine Sonnenschutz- und/oder Heizschicht ist und mindestens 50 % und sogar mindestens 70 % der Fläche F3 bedeckt.

18. Verbundverglasung für das Fahrzeug nach einem der vorstehenden Ansprüche, **dadurch gekennzeichnet, dass** das AMOLED-Display höchstens die gesamte, für den Fahrer sichtbaren Umfangszone in der Windschutzscheibe des Straßenfahrzeugs bis zu dem Rand der mittleren transparenten Sichtzone, insbesondere eine Zone mit der Bezeichnung reduzierte Zone B, wie durch eine Norm definiert, bedeckt.

19. Verbundverglasung für das Fahrzeug nach einem der vorstehenden Ansprüche, **dadurch gekennzeichnet, dass** sie eine Windschutzscheibe des Straßenfahrzeugs bildet, und der oder die folgende(n) Abstand/Abstände definiert wird/werden:
- der Abstand h2 zwischen dem oberen Rand der Windschutzscheibe und der oberen Begrenzung der mittleren Transparenzzone auf der Fahrer- oder Beifahrerseite, der vorzugsweise mindestens 120 mm beträgt, wobei sich das AMOLED-Display und auch der/die eventuell andere(n) AMOLED-Display(s) über der oberen Begrenzung befindet/befinden
- und/oder der Abstand h'2 zwischen dem unteren Rand der Windschutzscheibe und der unteren Begrenzung der mittleren Transparenzzone auf der Fahrer- oder Beifahrerseite von vorzugsweise mindestens 120 mm, wobei sich das AMOLED-Display, sowie vorzugsweise das/die eventuelle(n) andere(n) AMOLED-Display(s), unterhalb der unteren Begrenzung befindet/befinden,
- und/oder der Abstand h5 zwischen dem Seitenrand der Windschutzscheibe und der seitlichen Begrenzung der mittleren Transparenzzone auf der Fahrerseite oder der Beifahrerseite von vorzugsweise mindestens 80 mm, und wobei sich das AMOLED-Display zwischen dem seitlichen Rand und der seitlichen Begrenzung sowie vorzugsweise dem/den eventuelle(n) andere(n) AMOLED-Display(e) befindet,
- und/oder der Abstand Hₐ zwischen dem oberen Rand der Windschutzscheibe und der oberen Begrenzung der mittleren Transparenzzone in dem mittleren Teil, der vorzugsweise mindestens 180 mm beträgt, und wobei sich das AMOLED-Display zwischen dem Rand und der oberen Begrenzung sowie vorzugsweise dem/den eventuelle(n) andere(n) AMOLED-Display(n) befindet.

20. Verbundverglasung für das Fahrzeug nach einem der vorstehenden Ansprüche, **dadurch gekennzeichnet, dass** sie eine Windschutzscheibe des Straßenfahrzeugs bildet, und die folgenden Abstandspaare definiert werden:
- der Abstand h1 zwischen dem oberen Rand der Windschutzscheibe und der oberen Begrenzung F der Sichtumfangszone des Fahrers oder des Beifahrers in dem Fahrzeug, der vorzugsweise mindestens 15 mm beträgt, und der Abstand h2 zwischen dem oberen Rand und der oberen Begrenzung F' der mittleren Transparenzzone auf der Fahrer- oder Beifahrerseite, der mindestens 120 mm beträgt, wobei sich das AMOLED-Display zwischen den Begrenzungen F und F' sowie vorzugsweise dem/den eventuellen weiteren AMOLED-Display(s) befindet
- und/oder der Abstand h'1 zwischen dem unteren Rand der Windschutzscheibe und der unteren Begrenzung F1 der Sichtumfangszone des Fahrers oder des Beifahrers in dem Fahrzeug von vorzugsweise mindestens 40 mm, und der Abstand h'2 zwischen dem unteren Rand und der unteren Begrenzung F'1 der mittleren Transparenzzone auf der Fahrer- oder Beifahrerseite von mindestens 120 mm, wobei sich das AMOLED-Display zwischen den Begrenzungen F1 und F'1 sowie vorzugsweise dem/den eventuellen weiteren AMOLED-Display(s) befindet
- und/oder der Abstand h4 zwischen dem seitlichen Rand der Windschutzscheibe und der seitlichen Begrenzung F2 der Sichtumfangszone des Fahrers in dem Fahrzeug von vorzugsweise mindestens 15 mm und der Abstand h5 zwischen dem seitlichen Rand und der seitlichen Begrenzung F'2 der mittleren Transparenzzone auf der Fahrerseite oder der Beifahrerseite von mindestens 80 mm, wobei sich das AMOLED-Display zwischen den Begrenzungen F2 und F'2 sowie vorzugsweise dem/den eventuellen weiteren AMOLED-Display(s) befindet
- der Abstand h1 zwischen dem oberen Rand der Windschutzscheibe und der oberen Begrenzung F3 der Sichtumfangszone des Fahrers oder des Beifahrers in dem Fahrzeug, der vorzugsweise mindestens 15 mm beträgt, und der Abstand Hₐ zwischen dem oberen Rand und der oberen Begrenzung F'3 der mittleren Transparenzzone in dem mittleren Teil, der mindestens 180 mm beträgt, wobei sich das AMOLED-Display zwischen den Begrenzungen F3 und F'3 sowie vorzugsweise dem/den eventuellen weiteren AMOLED-Display(s) befindet.

21. Verbundverglasung für das Fahrzeug nach einem der vorstehenden Ansprüche, **dadurch gekennzeichnet, dass** sie eine Windschutzscheibe für das Straßenfahrzeug wie ein Auto, einen LKW bildet, mit der ersten und der zweiten gewölbten Verglasung und sogar einer Verbundzwischenlage aus PVB.

## Claims

1. A laminated vehicle glazing (100 to 800) preferably road vehicle windshield, comprising:
- a first glazing (1), with a first main face (11) termed F1, notably intended to be on the outside of the vehicle, and a second opposite main face (12) termed F2, preferably of thickness E1 of at most 2.5mm
- a lamination interlayer of polymeric substance (2), on the face F2 side, of thickness E2 preferably of at most 2.2mm
- a second glazing (1'), with a third main face (13) termed F3 on the lamination interlayer (2) side and a fourth opposite main face (14) termed F4, notably intended to be on the inside of the vehicle, preferably of thickness E'1 of at most 2.2mm, one at least of the first and second glazings being made of mineral glass,
- between the face F2 and the face F3, an organic light-emitting diode-based viewing screen, comprising a set of pixels, termed an AMOLED screen (3), the AMOLED screen comprising a zone of dynamic information display (32'), is of thickness E3 less than E2 and preferably subcentimetric, AMOLED screen having a front main face (32) oriented toward the face F3 and a rear face (31) oriented toward the face F2, the AMOLED screen being covered by a non-zero thickness of lamination interlayer and preferably within the lamination interlayer, the AMOLED screen is notably arranged peripherally,
- preferably an electrical connection element (4) of the AMOLED screen, with a flexible so-called connecting part (40) between the face F2 and the face F3 with a front surface (42) on the face F3 side and a rear surface (41) on the face F2 side, flexible connecting part covered by a non-zero thickness of lamination interlayer and preferably within the lamination interlayer, of thickness E4 less than E2 and preferably subcentimetric, linked to the AMOLED screen and extending the AMOLED screen in the direction of the lip of the second glazing, the, flexible, electrical connection element extending outside of the lip of the second glazing via a so-called exterior part (45),
**characterized in that** the AMOLED screen is flexible and **in that** the laminated glazing comprises between the face F2 and the face F3 a first sensor (70, 70', 71, 72, 73, 74), of thickness E6 less than E2, covered by a non-zero thickness of lamination interlayer, optionally within the lamination interlayer, the first sensor being arranged according to the following configurations:
(a) between the face F2 and the rear face and/or the rear surface
the AMOLED screen is opaque or transparent with a luminous transmission LT of less than 10% and even less than 5%, and/or the connecting part is opaque or of luminous transmission LT of less than 10% and even than 5% and
in configuration a) the first sensor is masked from the exterior by said external masking layer, or opposite a detection area corresponding to an opening (53) of the external masking layer.

2. The laminated vehicle glazing as claimed in claim 1, **characterized in that** the AMOLED screen is masked by a, so-called external, peripheral masking layer (5) between the face F2 and the rear face of the AMOLED screen and the connecting part is also optionally masked by the external masking layer or **in that** the AMOLED screen is in the clear window region and the connecting part is preferably masked by an external masking layer between the face F2 and the rear surface.

3. The laminated vehicle glazing as claimed in one of the preceding claims, **characterized in that** the AMOLED screen is transparent with a luminous transmission LT of less than 5%, and/or the connecting part of luminous transmission LT of less than 5%.

4. The laminated vehicle glazing as claimed in one of the preceding claims, **characterized in that** the electrical connection element, notably the connecting part, is masked from the exterior by the so-called external masking layer (5) between the rear surface and the face F2, preferably on face F2.

5. The laminated vehicle glazing as claimed in one of the preceding claims, **characterized in that** the laminated glazing is a windshield and the first sensor is in a sweep zone of one or more windshield wipers of the windshield.

6. The laminated vehicle glazing as claimed in one of the preceding claims, **characterized in that** the first sensor or another sensor is a coupling sensor, coupled functionally to the AMOLED screen controlling at least one display parameter and/or image data and optionally on face F4 exception said first sensor.

7. The laminated vehicle glazing as claimed in one of the preceding claims, **characterized in that** the first sensor or sensors are chosen from among at least the following sensors: camera in the visible, camera in the infrared, a photodetector, a rain detector, an antenna element for waves coming from the exterior or from the interior.

8. The laminated vehicle glazing as claimed in one of the preceding claims, **characterized in that** the first sensor is on the face F2, on the external masking layer on face F2 or in a detection area.

9. The laminated vehicle glazing as claimed in one of the preceding claims, **characterized in that** the first sensor comprises one or more electroconducting wires or else comprises an electroconducting element on a polymeric flexible film.

10. The laminated vehicle glazing as claimed in one of the preceding claims, **characterized in that** the first sensor comprises a conducting layer at the front or the rear of the AMOLED screen or of the connecting part, or else a conducting layer on the face F2 or face F3.

11. The laminated vehicle glazing as claimed in one of the preceding claims, **characterized in that** the second glazing bears on face F3 or F4 a so-called internal masking layer (6) able to mask from the interior:
- the technical edge or edges of the AMOLED screen and optional other AMOLED screen(s) that is or are adjacent or on distinct longitudinal edges and to mask even a junction zone between the lamination interlayer and the AM-OLED screen or optional other AMOLED screen(s)
- and/or the electrical connection element or elements of the AMOLED screen and optional other AMOLED screen(s) that is or are adjacent or on distinct longitudinal edges.

12. The laminated vehicle glazing as claimed in one of the preceding claims, **characterized in that** the technical edge or edges of the AMOLED screen and of optional other AMOLED screen(s) are masked by a so-called interior masking element on the AMOLED screen notably under a dielectric protective layer or being an opaque zone of a dielectric protective layer, notably a resin,
- and/or the electrical connection element or elements are masked by said interior masking element or another adjacent one notably under a dielectric protective layer or being an opaque zone of a dielectric protective layer, notably a resin.

13. The laminated vehicle glazing as claimed in one of the preceding claims, **characterized in that** the electrical connection element, preferably of submicronic thickness E4 substantially equal to E2 and of thickness E'4 less than E4 beyond the lip of the second glazing, is curved and is against or fixed by gluing on face F4 without stretching as far as the display zone and preferably the width of the connection element (4) is essentially equal to that of the AMOLED screen up to the edge of the laminated glazing.

14. The laminated vehicle glazing as claimed in one of the preceding claims, **characterized in that** the AMOLED screen (3) and/or the connecting part has a thickness at most equal to 0.8mm, preferably at most equal to 0.7mm, and in a particularly preferred manner at most equal to 0.6mm.

15. The laminated vehicle glazing as claimed in one of the preceding claims, **characterized in that** it comprises on the face F3 a conducting layer forming an antenna element and optionally solar control and/or heating layer, which is transparent and opposite the display zone or which is optionally transparent and absent from the zone opposite the front face.

16. The laminated vehicle glazing as claimed in one of the preceding claims, **characterized in that** it comprises between the face F2 and the face F4, notably on the face F3 or on the face F4, a preferably transparent electroconducting layer or a set of preferably transparent or invisible electroconducting wires and **in that** optionally opposite the display zone (32') the electroconducting layer, or the set of electroconducting wires is absent notably by means of an opening of size greater than or equal to the display zone and even than the AMOLED screen.

17. The laminated vehicle glazing as claimed in the preceding claim, **characterized in that** the electroconducting layer, notably with said opening, is on the face F3, is or on a flexible transparent polymeric film on the face F3 side, and is a solar control and/or heating layer and covers at least 50% and even at least 70% of the face F3.

18. The laminated vehicle glazing as claimed in one of the preceding claims, **characterized in that** the AMOLED screen covers at most the entire peripheral zone visible by the driver in the road vehicle windshield up to the edge of the transparent central vision zone notably a zone termed restricted zone B defined by a standard.

19. The laminated vehicle glazing as claimed in one of the preceding claims, **characterized in that** it forms a road vehicle windshield, and the following distance or distances is/are defined:
- h2 distance between the upper edge of the windshield and the upper limit of the central zone of transparency on the driver's or copilot's side, preferably of at least 120mm, the AMOLED screen being above said upper limit and even the optional other AMOLED screen(s)
- and/or h'2 distance between the lower edge of the windshield and the lower limit of the central transparency zone on the driver's or copilot's side preferably of at least 120mm, and the AMOLED screen being below said lower limit as well as preferably the optional other AMOLED screen(s),
- and/or h5 distance between the lateral edge of the windshield and the lateral limit of the central zone of transparency on the driver's side or the copilot's side preferably of at least 80mm, and the AMOLED screen being between the lateral edge and said lateral limit as well as preferably the optional other AMOLED screen(s),
- and/ or Hₐ distance between the upper edge of the windshield and the upper limit of the central transparency zone in the central part, preferably of at least 180mm, and the AMOLED screen being between the edge and the upper limit as well as preferably the optional other AMOLED screen(s).

20. The laminated vehicle glazing as claimed in one of the preceding claims, **characterized in that** it forms a road vehicle windshield, and the following pairs of distances are defined:
- h1 distance between the upper edge of the windshield and the upper limit F of the peripheral zone of vision of the driver or of the copilot in the vehicle, preferably of at least 15mm and h2 distance between the upper edge and the upper limit F' of the central zone of transparency on the driver's or copilot's side, of at least 120mm, the AMOLED screen is between said limits F and F' as well as preferably the optional other AMOLED screen(s)
- and/or h'1 distance between the lower edge of the windshield and the lower limit F1 of the peripheral zone of vision of the driver or of the copilot in the vehicle preferably of at least 40mm and h'2 distance between the lower edge and the lower limit F'1 of the central transparency zone on the driver's or copilot's side of at least 120mm, the AMOLED screen is between said limits F1 and F'1 as well as preferably the optional other AMOLED screen(s)
- and/or h4 distance between the lateral edge of the windshield and the lateral limit F2 of the peripheral zone of vision of the driver in the vehicle preferably of at least 15mm and h5 distance between the lateral edge and the lateral limit F'2 of the central zone of transparency on the driver's side or the copilot's side of at least 80mm, the AMOLED screen is between said limits F2 and F'2 as well as preferably the optional other AMOLED screen(s)
- h1 distance between the upper edge of the windshield and the upper limit F3 of the peripheral zone of vision of the driver or of the copilot in the vehicle, preferably of at least 15mm and Hₐ distance between the upper edge and the upper limit F'3 of the central transparency zone in the central part, of at least 180mm, the AMOLED screen is between said limits F3 and F'3 as well as preferably the optional other AMOLED screen(s).

21. The laminated vehicle glazing as claimed in one of the preceding claims, **characterized in that** it forms a windshield of a road vehicle such as an automobile, a truck, with the first and second glazing cambered and even a PVB lamination interlayer.
